(19) Europäisches Patentamt
European Patent Office
Office européen des brevets

(11) EP 3 527 602 B1

(12) EUROPEAN PATENT SPECIFICATION

(45) Date of publication and mention of the grant of the patent:
**27.01.2021 Bulletin 2021/04**

(21) Application number: **19156845.0**

(22) Date of filing: **13.02.2019**

(51) Int Cl.:
***C08G 18/79*** *(2006.01)* ***C09D 175/04*** *(2006.01)*
***C09D 175/06*** *(2006.01)* ***C08G 18/38*** *(2006.01)*
***C09D 5/08*** *(2006.01)* ***C08G 18/02*** *(2006.01)*
***C08G 18/18*** *(2006.01)* ***C08G 18/62*** *(2006.01)*
***C08G 18/78*** *(2006.01)* ***C08G 18/16*** *(2006.01)*
***C09D 175/02*** *(2006.01)* ***C08G 18/42*** *(2006.01)*

(54) **POLYISOCYANATE COMPOSITION, PAINT COMPOSITION, METHOD OF MANIFACTURING COATING FILM, AND COATING FILM**

POLYISOCYANATZUSAMMENSETZUNG, BESCHICHTUNGSZUSAMMENSETZUNG, VERFAHREN ZUR HERSTELLUNG EINES BESCHICHTUNGSFILMS UND BESCHICHTUNGSFILM

COMPOSITION DE POLYISOCYANATE, COMPOSITION DE REVÊTEMENT, PROCÉDÉ DE FABRICATION D'UN FILM DE REVÊTEMENT ET FILM DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2018 JP 2018025075**

(43) Date of publication of application:
**21.08.2019 Bulletin 2019/34**

(73) Proprietor: **Asahi Kasei Kabushiki Kaisha**
**Tokyo 1000006 (JP)**

(72) Inventor: **Yamauchi, Masakazu**
**Tokyo, 100-0006 (JP)**

(74) Representative: **Strehl Schübel-Hopf & Partner**
**Maximilianstrasse 54**
**80538 München (DE)**

(56) References cited:
**CA-A1- 2 244 486 US-A- 6 090 939**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a polyisocyanate composition, a paint composition, a method of manufacturing a coating film, and a coating film.

### BACKGROUND ART

A polyisocyanate composition having an isocyanurate group is obtained from aliphatic diisocyanate including 1,6-diisocyanatohexane (also referred to as "hexamethylene diisocyanate"; hereinafter sometimes abbreviated as "HDI") has excellent weather fastness and excellent heat resistance and thus is widely used in various applications.

In recent years, technological development for lowering the viscosity of a polyisocyanate composition used as a curing agent has been vigorously performed (see, for example, Patent Document 1), due to increasing global environmental protection. This is because, by lowering the viscosity of the polyisocyanate composition, an amount of an organic solvent used in the paint composition can be reduced.

Examples of a technique for lowering the viscosity of various polyisocyanate compositions derived from aliphatic diisocyanate including HDI and the like include a technique concerning a polyisocyanate composition having a uretdione group having a low viscosity (see, for example, Patent Document 2).

Examples thereof include a technique relating to a polyisocyanate composition having a uretdione group and excellent curability and excellent storage stability (for example, see Patent Document 3) and a technique relating to a polyisocyanate composition having an iminooxadiazinedione group and achieving the low viscosity without decreasing the number of average functional groups (for example, see Patent Documents 4 and 5).

### PRIOR ART LITERATURE

#### Patent Documents

Patent Document 1: Japanese Unexamined Patent Application, First Publication No. H05-222007
Patent Document 2: Japanese Patent (Granted) Publication No. 3055197
Patent Document 3: PCT International Publication No. WO2007/046470
Patent Document 4: Japanese Patent (Granted) Publication No. 5054300
Patent Document 5: Japanese Unexamined Patent Application, First Publication No. 2014-214301

### DISCLOSURE OF INVENTION

#### Problems to be Solved by the Invention

By using techniques disclosed in Patent Documents 1 and 2, it is possible to obtain polyisocyanate having a low viscosity. Therefore, in a case where a portion of the solvent is used, the polyisocyanate can be used as a curing agent for an aqueous paint composition without modifying the hydrophilic group. However, the polyisocyanate obtained by these techniques has low crosslinking properties, and the coating film physical properties such as the solvent resistance in a case where a coating film is formed are insufficient in some cases.

In a case where the polyisocyanate was used in the aqueous paint composition, in the technique disclosed in Patent Document 3 may have insufficient dispersibility in water. In the techniques disclosed in Patent Documents 4 and 5, the dispersibility in water is improved by causing the polyisocyanate to contain an iminooxadiazinedione group, but in a case where the polyisocyanate is used as a curing agent for a polyaspartic paint composition, coating film physical properties such as weather fastness were insufficient in some cases.

The present invention has been made in view of the above circumstances and provides a polyisocyanate composition that has excellent dispersibility in water and is capable of forming a coating film having excellent solvent resistance in a case of being used in an aqueous paint composition and is capable of forming a coating film having excellent weather fastness in a case of being used in a polyaspartic paint composition, a paint composition and a coating film in which the polyisocyanate composition is used.

The present inventors have diligently conducted research in order to achieve the above object and have found that the object of the invention can be achieved by a polyisocyanate composition that is obtained from aliphatic diisocyanate including HDI, has an isocyanurate group and an iminooxadiazinedione group, and contains a specific ratio of a

pentamer of aliphatic diisocyanate having a specific structure, so as to complete the present invention.

Means for Solving the Problems

That is, the present invention includes the following aspects.

A polyisocyanate composition according to a first aspect that is obtained from aliphatic diisocyanate including 1,6-diisocyanatohexane, the composition comprising: an isocyanurate group; and an iminooxadiazinedione group, in which a ratio (A / (A + B)) of a molar amount (A) of an isocyanurate trimer represented by Formula (I) with respect to a total molar amount (A + B) of the molar amount (A) of the isocyanurate trimer and a molar amount (B) of iminooxadiazinedione trimer represented by Formula (II) is 0.1 to 0.9, and in which a ratio (C) of a molar amount of a pentamer represented by Formula (III) with respect to a total molar amount of a pentamer of the aliphatic diisocyanate included in the polyisocyanate composition is $A \times B \times 2 \times 0.9$ or more,

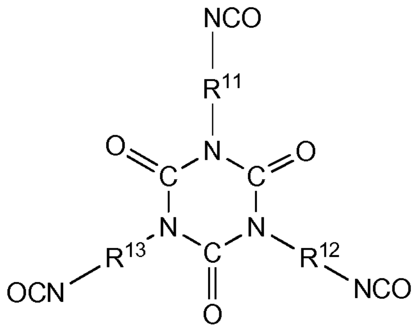

... (I)

(in Formula (I), $R^{11}$, $R^{12}$, and $R^{13}$ each independently represents a divalent aliphatic hydrocarbon group that may have an ester group,)

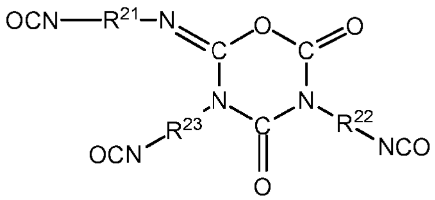

... (II)

(in Formula (II), $R^{21}$, $R^{22}$, and $R^{23}$ each independently represents a divalent aliphatic hydrocarbon group that may include an ester group,)

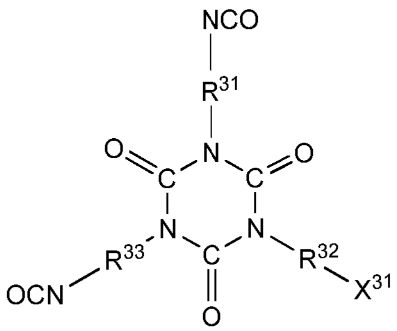

... (III)

(in Formula (III), $R^{31}$, $R^{32}$, and $R^{33}$ each independently represents a divalent aliphatic hydrocarbon group that may include an ester group. $X^{31}$ is any one of groups represented by Formulae (IV-1) to (IV-3),)

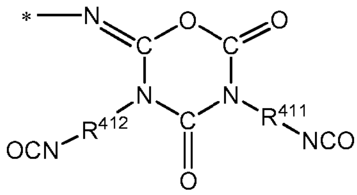

... (IV-1)

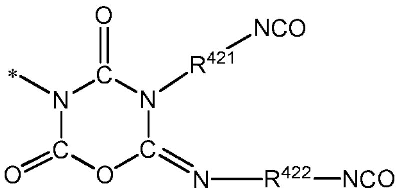

... (IV-2)

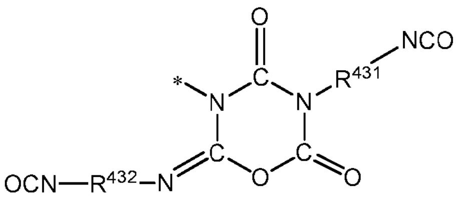

... (IV-3)

(in Formula (IV-1), $R^{411}$ and $R^{412}$ each independently represents a divalent aliphatic hydrocarbon group that may include an ester group,

in Formula (IV-2), $R^{421}$ and $R^{422}$ each independently represents a divalent aliphatic hydrocarbon group that may include an ester group,

in Formula (IV-3), $R^{431}$ and $R^{432}$ each independently represents a divalent aliphatic hydrocarbon group that may include an ester group, and

the asterisk indicates a bonding point to $R^{32}$.)

In the polyisocyanate composition according to the first aspect, a viscosity in a case of being measured at 25°C may be 200 mPa·s to 2,000 mPa·s.

The polyisocyanate composition according to the first aspect further comprises an allophanate group, a ratio (d / (a + b + d)) of a molar amount (d) of an allophanate group with respect to a total molar amount (a + b + d) of a molar amount (a) of the isocyanurate group, a molar amount (b) of the iminooxadiazinedione group, and a molar amount (d) of the allophanate group may be 0.001 to 0.10.

A paint composition according to a second aspect comprises: the polyisocyanate composition according to the first aspect; and any one kind of polyol selected from acrylic polyol and polyester polyol or an aspartic acid ester compound represented by Formula (V).

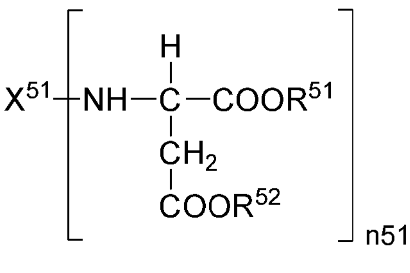

... (V)

(in Formula (V), $X^{51}$ is a divalent or higher valent organic group. $R^{51}$ and $R^{52}$ each independently represents an organic group that is inactive to an isocyanate group under a reaction condition. $R^{51}$ and $R^{52}$ may be identical to or different from each other. n51 is an integer of 2 or more.)

A method of manufacturing a coating film according to a third aspect comprises: a step of curing the paint composition according to the second aspect.

A coating film according to a fourth aspect that is obtained by curing the paint composition according to the second aspect.

Effects of the Invention

The polyisocyanate composition according to the aspect has a low viscosity, has excellent dispersibility in water is capable of forming a coating film having excellent solvent resistance in a case of being used in an aqueous paint composition and is capable of forming a coating film having excellent weather fastness in a case of being used in a polyaspartic paint composition. The paint composition according to the aspect has excellent dispersibility in water and is capable of forming a coating film having excellent solvent resistance in a case of being used in an aqueous paint composition and is capable of forming a coating film having excellent weather fastness in a case of being used in a polyaspartic paint composition. The coating film according to the aspect has excellent solvent resistance and excellent weather fastness.

BEST MODE FOR CARRYING OUT THE INVENTION

Hereinafter, modes for carrying out the present invention (hereinafter, referred to as "the present embodiment" in some cases) is specifically described. The present embodiment below is provided for describing the present invention, and is not intended to limit the present invention to the following content. The present invention is performed by appropriate modification in the scope of the gist thereof.

In the present specification, "polyol" means a compound having two or more hydroxy groups (-OH) in one molecule.

In the present specification, the term "polyisocyanate" means a reactant in which a plurality of monomer compounds having two or more isocyanate groups (-NCO) are bonded.

In the present specification, unless otherwise specified, "(meth)acryl" includes methacryl and acryl, and "(meth)acrylate" includes methacrylate and acrylate.

<<Polyisocyanate composition>>

The polyisocyanate composition according to the present embodiment can be obtained from aliphatic diisocyanate including 1,6-diisocyanatohexane and has an isocyanurate group and an iminooxadiazinedione group.

The polyisocyanate composition according to the present embodiment includes an isocyanurate trimer (hereinafter, referred to as an "isocyanurate trimer (I)" in some cases) represented by Formula (I), an iminooxadiazinedione trimer (hereinafter, referred to as an "iminooxadiazinedione trimer (II)" in some cases) represented by Formula (II), and a pentamer (hereinafter, referred to as a "pentamer (III)" in some cases) represented by Formula (III).

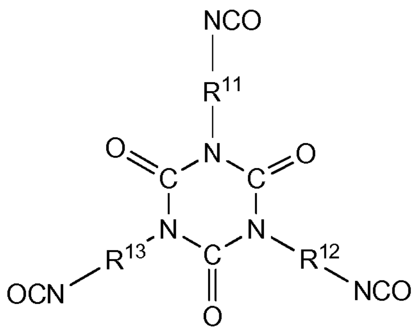

... (I)

(In Formula (I), $R^{11}$, $R^{12}$, and $R^{13}$ each independently represents a divalent aliphatic hydrocarbon group that may have an ester group.)

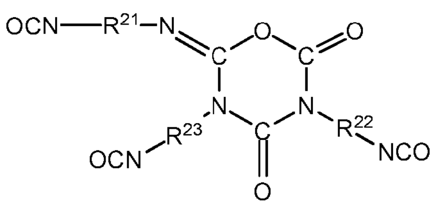

... (II)

(In Formula (II), $R^{21}$, $R^{22}$, and $R^{23}$ each independently represents a divalent aliphatic hydrocarbon group that may include an ester group.)

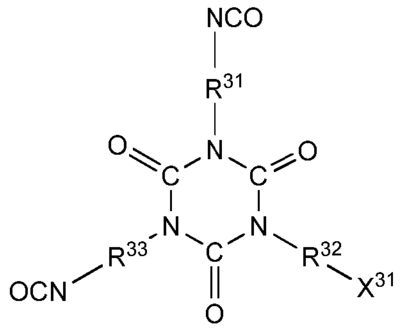

... (III)

(In Formula (III), $R^{31}$, $R^{32}$, and $R^{33}$ each independently represents a divalent aliphatic hydrocarbon group that may include an ester group. $X^{31}$ is any one of groups represented by Formulae (IV-1) to (IV-3).)

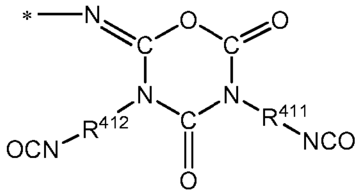

... (IV-1)

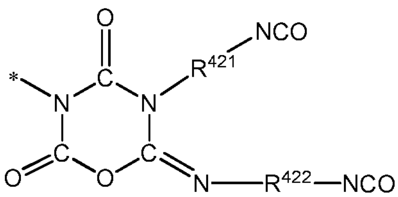

... (IV-2)

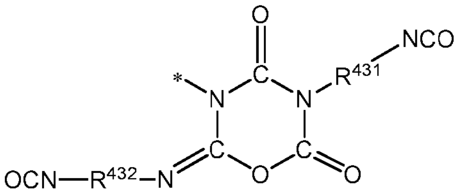

... (IV-3)

(In Formula (IV-1), $R^{411}$ and $R^{412}$ each independently represents a divalent aliphatic hydrocarbon group that may include an ester group.

In Formula (IV-2), $R^{421}$ and $R^{422}$ each independently represents a divalent aliphatic hydrocarbon group that may include an ester group.

In Formula (IV-3), $R^{431}$ and $R^{432}$ each independently represents a divalent aliphatic hydrocarbon group that may include an ester group.

The asterisk indicates a bonding point to $R^{32}$.)

At this point, in the polyisocyanate composition according to the present embodiment, a ratio (A / (A + B)) of the molar amount (A) of the isocyanurate trimer (I) with respect to the total molar amount (A + B) of a molar amount (A) of the isocyanurate trimer (I) and a molar amount (B) of the iminooxadiazinedione trimer (II) is 0.1 to 0.9.

A ratio (C) of the molar amount of the pentamer (III) with respect to the total molar amount of the pentamer of aliphatic diisocyanate included in the polyisocyanate composition according to the present embodiment is $A \times B \times 2 \times 0.9$ or more.

In the polyisocyanate composition according to the embodiment, the viscosity measured at 25°C is not particularly limited, but is preferably 200 mPa·s to 2,000 mPa·s.

Since the polyisocyanate composition according to the present embodiment has the above configuration, the paint composition according to the aspect has excellent dispersibility in water and is capable of forming a coating film having excellent solvent resistance in a case of being used in an aqueous paint composition and is capable of forming a coating film having excellent weather fastness in a case of being used in a polyaspartic paint composition.

<Polyisocyanate>

Polyisocyanate included in the polyisocyanate composition according to the present embodiment is derived from aliphatic diisocyanate including 1,6-diisocyanatohexane (hereinafter, simply referred to as "HDI" in some cases). That is, polyisocyanate included in the polyisocyanate composition according to the present embodiment is a reactant (polymer) of aliphatic diisocyanate including HDI.

[Aliphatic diisocyanate]

Aliphatic diisocyanate as a raw material of polyisocyanate is not limited to the following but is preferably one having 4 to 30 carbon atoms. Examples of the aliphatic diisocyanate include HDI, 1,4-diisocyanatobutane, 1,5-diisocyanatopentane, 2,2,4-trimethyl-1,6-diisocyanatohexane, and lysine diisocyanate. These aliphatic diisocyanates may be used singly, or two or more kinds thereof may be used in combination.

Among these, in view of ease of industrial availability and reactivity during the manufacturing of polyisocyanate, the polyisocyanate composition according to the present embodiment preferably includes polyisocyanate obtained from aliphatic diisocyanate including HDI.

In the polyisocyanate composition according to the present embodiment, as the diisocyanate that becomes a raw material of the polyisocyanate, a portion of alicyclic diisocyanate may be included.

The alicyclic diisocyanate is not limited to the following but preferably is one having 8 to 30 carbon atoms. Examples of alicyclic diisocyanate include isophorone diisocyanate (hereinafter referred to as "IPDI" in some cases), 1,3-bis(isocyanatomethyl)-cyclohexane, 4,4'-dicyclohexylmethane diisocyanate, norbornene diisocyanate, and hydrogenated xylylene diisocyanate. These alicyclic diisocyanates may be used singly or two or more kinds thereof may be used in combination.

Among these, in view of weather fastness and the ease of industrial availability, as the alicyclic diisocyanate, IPDI is preferable.

[Functional group]

(Isocyanurate group and iminooxadiazinedione group)

The polyisocyanate composition of the present embodiment has an isocyanurate group and an iminooxadiazinedione group.

Generally, the "isocyanurate group" is a functional group derived from polyisocyanate including three molecules of a diisocyanate monomer and is a group represented by Formula (I-1).

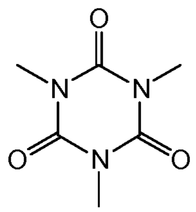

... (I-1)

Generally, the "iminooxadiazinedione group" is a functional group derived from polyisocyanate including three molecules of a diisocyanate monomer and is a group represented by Formula (II-1).

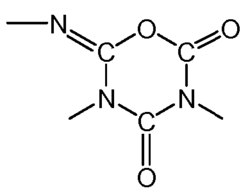

... (II-1)

(Allophanate group)

The polyisocyanate composition according to the present embodiment may have an allophanate group in

addition to the isocyanurate group and the iminooxadiazinedione group.

Generally, the "allophanate group" is a group that is formed with a hydroxyl group and an isocyanate group of alcohol and is represented by Formula (VI).

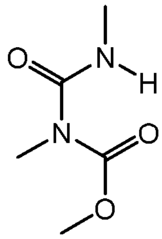
... (VI)

In a case where the polyisocyanate composition of the present embodiment has an allophanate group, alcohol used for forming the allophanate group is preferably alcohol formed only with carbon, hydrogen, and oxygen.

Specifically, the alcohol is not limited to the following, but examples thereof include monoalcohol and dialcohol. These alcohols may be used singly, or two or more kinds thereof may be used in combination.

Examples of the monoalcohol include methanol, ethanol, propanol, butanol, pentanol, hexanol, heptanol, octanol, and nonanol.

Examples of the dialcohol include ethylene glycol, 1,3-butanediol, neopentyl glycol, and 2-ethylhexanediol.

Among these, the alcohol is preferably monoalcohol and more preferably monoalcohol having a molecular weight of 200 or less.

In a case where a molar amount of the isocyanurate group in the polyisocyanate composition according to the present embodiment is "a", a molar amount of the iminooxadiazinedione group is "b", and a molar amount of the allophanate group is "d", a ratio (d / (a + b + d) of a molar amount (d) of the allophanate group with respect to a total molar amount (a + b + d) of the isocyanurate group, the iminooxadiazinedione group, and the allophanate group is preferably 0.01 to 0.10, more preferably 0.01 to 0.07, and even more preferably 0.01 to 0.05. By causing d/(a+b+d) to be the upper limit or less, the crosslinking properties can be further improved.

Specifically, d / (a + b + d) can be measured by the method described in the examples below.

(Other functional groups)

In addition to the isocyanurate group and the iminooxadiazinedione group, the polyisocyanate composition according to the present embodiment may have other functional groups such as a uretdione group, a urethane group, a urea group, a biuret group, a uretonimino group, and a carbodiimide group.

[Specific examples of polyisocyanate]

The polyisocyanate composition of the present embodiment includes polyisocyanate that has any one of an isocyanurate group and an iminooxadiazinedione group. Examples of the polyisocyanate include the isocyanurate trimer (I), the iminooxadiazinedione trimer (II), the pentamer (III) (hereinafter, referred to as an "isocyanurate-iminooxadiazinedione pentamer" in some cases), a pentamer (hereinafter, referred to as an "isocyanurate-isocyanurate pentamer" in some cases) having two isocyanurate groups, and a pentamer (hereinafter, referred to as an "iminooxadiazinedione. iminooxadiazinedione pentamer" in some cases) having two iminooxadiazinedione groups.

(Isocyanurate trimer (I))

The isocyanurate trimer (I) is a compound represented by Formula (I). The isocyanurate trimer (I) is a trimer obtained by polymerizing three molecules of aliphatic diisocyanate and has an isocyanurate group.

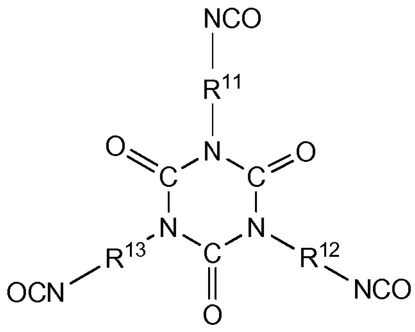

... (I)

• $R^{11}$, $R^{12}$, and $R^{13}$

In Formula (I), $R^{11}$, $R^{12}$, and $R^{13}$ each independently represents a divalent aliphatic hydrocarbon group that may include an ester group. $R^{11}$, $R^{12}$, and $R^{13}$ may be identical to or different from each other.

Examples of the divalent aliphatic hydrocarbon group that may include an ester group in $R^{11}$, $R^{12}$, and $R^{13}$ may be linear, branched, or cyclic.

The number of carbon atoms of the divalent aliphatic hydrocarbon group that may contain an ester group in $R^{11}$, $R^{12}$, and $R^{13}$ is preferably 4 to 30 and more preferably 4 to 10.

Specific examples of the divalent aliphatic hydrocarbon group that may include an ester group in $R^{11}$, $R^{12}$, and $R^{13}$ include a butylene group, a pentamethylene group, a hexamethylene group, a 2,2,4-trimethylhexamethylene group, a 1- (methoxycarbonyl) pentane-1,5-diyl group, a 1-methylene-1,3,3-trimethylcyclohexane-5-yl group, a cyclohexane-1,3-diylbismethylene group, a methylenebis (1,4-cyclohexanediyl) group, and a norbomene-1,2-diyl group.

Among these, as $R^{11}$, $R^{12}$, and $R^{13}$, a linear divalent aliphatic hydrocarbon group is preferable, a butylene group, a pentamethylene group, or a hexamethylene group is more preferable, and a hexamethylene group is even more preferable.

The concentration of the isocyanurate trimer (I) in the polyisocyanate composition according to the present embodiment is not particularly limited, but is preferably 55 mass% to 95 mass% and more preferably 60 mass% to 95 mass% with respect to the total mass of the polyisocyanate composition.

In a case where the concentration of the isocyanurate trimer (I) is the lower limit or more, the viscosity of the polyisocyanate composition according to the present embodiment can be effectively decreased. Meanwhile, in a case where the concentration of the isocyanurate trimer (I) is the upper limit or less, the yield of the polyisocyanate composition according to the present embodiment can be maintained to be higher.

The concentration of the isocyanurate trimer (I) can be measured by gel permeation chromatography (hereinafter, also referred to as "GPC" in some cases).

(Iminooxadiazinedione trimer (II))

The iminooxadiazinedione trimer (II) is a compound represented by Formula (II). The iminooxadiazinedione trimer (II) is a trimer obtained by polymerizing three molecules of aliphatic diisocyanate and has an iminooxadiazinedione group.

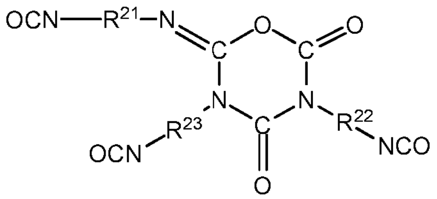

... (II)

• $R^{21}$, $R^{22}$, and $R^{23}$

In Formula (II), $R^{21}$, $R^{22}$, and $R^{23}$ each independently represents a divalent aliphatic hydrocarbon group that may include an ester group. $R^{21}$, $R^{22}$, and $R^{23}$ may be identical to or different from each other.

Examples of the divalent aliphatic hydrocarbon group in $R^{21}$, $R^{22}$, and $R^{23}$ include those as exemplified in "$R^{11}$, $R^{12}$, and $R^{13}$". Among these, as $R^{21}$, $R^{22}$, and $R^{23}$, a linear divalent aliphatic hydrocarbon group is preferable, a butylene group, a pentamethylene group, or a hexamethylene group is more preferable, and a hexamethylene group is even

more preferable.

In a case where a molar amount of the isocyanurate trimer (I) in the polyisocyanate composition of the present embodiment is "A", and a molar amount of an iminooxadiazinedione trimer (II) is "B", a ratio (A / (A + B)) of a molar amount (A) of an isocyanurate trimer (I) with respect to a total molar amount (A + B) of a molar amount of the isocyanurate trimer (I) and a molar amount of the iminooxadiazinedione trimer (II) is 0.1 to 0.9, preferably 0.3 to 0.85, more preferably 0.4 to 0.8, even more preferably 0.5 to 0.75, and particularly preferably 0.55 to 0.7.

In a case where A / (A + B) are the lower limit or more, the weather fastness of the coating film in a case where the polyisocyanate composition according to the present embodiment is used in the polyaspartic paint composition can be increased. In a case where A / (A + B) is the upper limit or less, the dispersibility in water in a case where the polyisocyanate composition according to the present embodiment is used in an aqueous paint composition can be more effectively exhibited.

A / (A + B) can be measured by the method described in the examples below.

Examples of a method of controlling A / (A + B) to be in the above range include a method of performing isocyanurate formation reaction of HDI, deactivating a catalyst, then using a heterocycle-containing phosphorus-based compound such as 1-butylphosphorane as a catalyst for the iminooxadiazinedione formation reaction, and performing iminooxadiazinedione formation reaction for several hours and a method of mixing a portion of the polyisocyanate composition obtained by iminooxadiazinedione formation reaction for several hours to several tens of hours at the temperature of about 20°C to 80°C with the polyisocyanate composition obtained by performing isocyanurate formation reaction of HDI, using a heterocycle-containing phosphorus-based compound such as 1-butylphosphorane on HDI as a catalyst for the iminooxadiazinedione formation reaction.

Among these, as a method of controlling A / (A + B) in the above range, in view of ease of availability of polyisocyanate having various molar ratios, a method of performing the isocyanurate formation reaction of HDI, deactivating a catalyst, then using the heterocycle-containing phosphorus-based compound of 1-butylphosphorane as a catalyst for the iminooxadiazinedione formation reaction, and performing iminooxadiazinedione formation reaction for severa hours is preferable.

(Pentamer (III))

The pentamer (III) is a compound represented by Formula (III). The pentamer (III) is a pentamer obtained by polymerizing five molecules of aliphatic diisocyanate and has an isocyanurate group and an iminooxadiazinedione group.

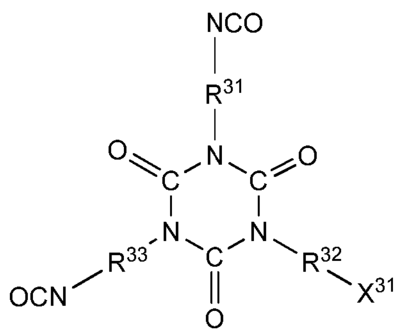

... (III)

• $R^{31}$, $R^{32}$, and $R^{33}$

$R^{31}$, $R^{32}$, and $R^{33}$ each independently represents a divalent aliphatic hydrocarbon group that may include an ester group. $R^{31}$, $R^{32}$, and $R^{33}$ may be identical to or different from each other.

Examples of the divalent aliphatic hydrocarbon group in $R^{31}$, $R^{32}$, and $R^{33}$ include those as exemplified in "$R^{11}$, $R^{12}$, and $R^{13}$". Among these, as $R^{31}$, $R^{32}$, and $R^{33}$, a linear divalent aliphatic hydrocarbon group is preferable, a butylene group, a pentamethylene group, or a hexamethylene group is more preferable, and a hexamethylene group is even more preferable.

• $X^{31}$

$X^{31}$ is any one of a group (hereinafter, simply referred to as a "group (IV-1)") represented by Formula (IV-1), a group (hereinafter, simply referred to as a "group (IV-2)") represented by Formula (IV-2), and a group (hereinafter, simply referred to as a "group (IV-3)") represented by Formula (IV-3).

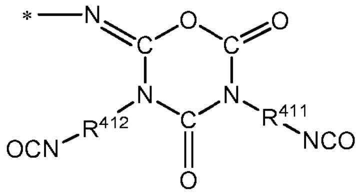

... (IV-1)

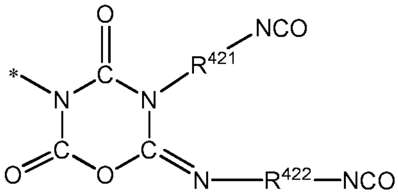

... (IV-2)

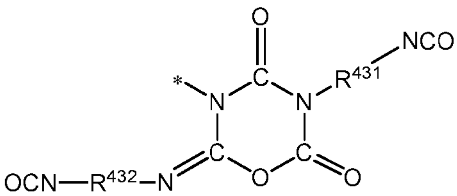

... (IV-3)

• $R^{411}$, $R^{412}$, $R^{421}$, $R^{422}$, $R^{431}$, and $R^{432}$

$R^{411}$, $R^{412}$, $R^{421}$, $R^{422}$, $R^{431}$, and $R^{432}$ each independently represents a divalent aliphatic hydrocarbon group that may include an ester group. $R^{411}$, $R^{412}$, $R^{421}$, $R^{422}$, $R^{431}$, and $R^{432}$ may be identical to or different from each other.

Examples of the divalent aliphatic hydrocarbon group in $R^{411}$, $R^{412}$, $R^{421}$, $R^{422}$, $R^{431}$, and $R^{432}$ include those as exemplified in "$R^{11}$, $R^{12}$, and $R^{13}$". Among these, $R^{411}$, $R^{412}$, $R^{421}$, $R^{422}$, $R^{431}$, and $R^{432}$ each are preferably a linear divalent aliphatic hydrocarbon group, more preferably a butylene group, a pentamethylene group, or a hexamethylene group, and even more preferably a hexamethylene group.

The asterisk indicates a bonding point to $R^{32}$. That is, examples of the pentamer (III) include a compound (hereinafter, simply referred to as a "compound (III-1)") represented by Formula (III-1), a compound (hereinafter, simply referred to as a "compound (III-2)") represented by Formula (III-2), and a compound (hereinafter, simply referred to as a "compound (III-3)") represented by Formula (III-3). The compounds (III-1), (III-2), and (III-3) are structural isomers.

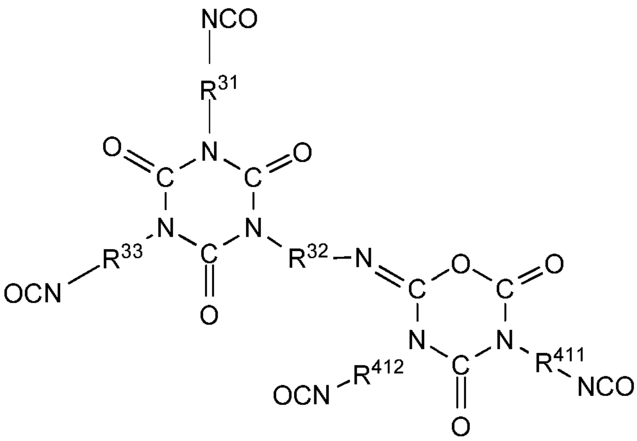

... (III-1)

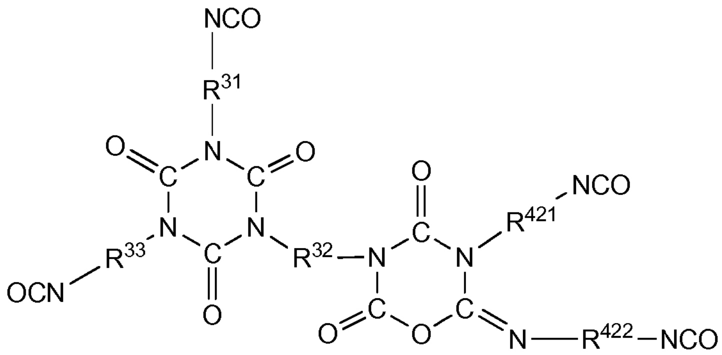

... (III-2)

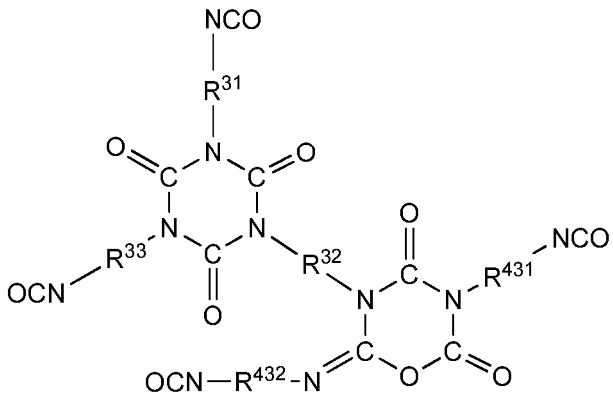

... (III-3)

(In Formula (III-1), (III-2), and (III-3), $R^{31}$, $R^{32}$, $R^{33}$, $R^{411}$, $R^{412}$, $R^{421}$, $R^{422}$, $R^{431}$, and $R^{432}$ are the same as those in (IV-1), (VI-2), and (IV-3).)

In the groups (IV-1), (IV-2), and (IV-3), an asterisked bond is formed between one nitrogen atom constituting an iminooxadiazinedione group in $X^{31}$ and one carbon atom constituting $R^{32}$ obtained by bonding a nitrogen atom constituting an isocyanurate group that is a bonding site of $X^{31}$.

In a case where a ratio of the molar amount of the pentamer (III) with respect to the total molar amount of the pentamer of aliphatic diisocyanate included in the polyisocyanate composition according to the present embodiment is "C", the C can be represented by using the molar amount (A) of the isocyanurate trimer (I) and the molar amount (B) of the iminooxadiazinedione trimer (II).

That is, the lower limit of the C is $A \times B \times 2 \times 0.9$, is preferably $A \times B \times 2 \times 0.95$, more preferably $A \times B \times 2 \times 1.0$, and even more preferably $A \times B \times 2 \times 1.05$.

Meanwhile, the upper limit of the C is preferably $A \times B \times 2 \times 1.5$, more preferably $A \times B \times 2 \times 1.3$, and even more preferably $A \times B \times 2 \times 1.2$.

That is the ratio (C) of the molar amount of the pentamer (III) with respect to the total molar amount of the pentamer of aliphatic diisocyanate included in the polyisocyanate composition is $A \times B \times 2 \times 0.9$ or more, preferably $A \times B \times 2 \times 0.95$ to $A \times B \times 2 \times 1.5$, more preferably $A \times B \times 2 \times 1.0$ to $A \times B \times 2 \times 1.3$, and even more preferably $A \times B \times 2 \times 1.05$ to $A \times B \times 2 \times 1.2$.

In a case where the C is the lower limit or more, the weather fastness of the coating film in a case where the polyisocyanate composition according to the present embodiment is used in a polyaspartic paint composition can be increased.

C can be measured by the method described in the examples below.

Examples of a method of controlling the ratio (C) of the molar amount of the pentamer (III) with respect to the total molar amount of the pentamer of the aliphatic diisocyanate included in the polyisocyanate composition include a method of performing isocyanurate formation reaction of HDI, deactivating a catalyst, then using a heterocycle-containing phosphorus-based compound such as 1-butylphosphorane as a catalyst for the iminooxadiazinedione formation reaction, and performing iminooxadiazinedione formation reaction for several hours and a method of performing the iminooxadiazinedione formation reaction of HDI, deactivating a catalyst, then using a catalyst for the isocyanurate formation reaction, and performing isocyanurate formation reaction for several hours. Among these, as a method of controlling C in the above range, in view of ease of reaction control, a method of performing the isocyanurate formation reaction of HDI, deactivating a catalyst, then using the heterocycle-containing phosphorus-based compound such as 1-butylphosphorane as a catalyst for the iminooxadiazinedione formation reaction, and performing iminooxadiazinedione formation reaction

for several hours is preferable.

<Method of manufacturing polyisocyanate composition>

Hereinafter, an example of the method of manufacturing the polyisocyanate composition according to the present embodiment is described.

The polyisocyanate composition according to the present embodiment is at least used as HDI(1,6-diisocyanatohexane) as a raw material.

The polyisocyanate composition according to the present embodiment can be obtained by performing an isocyanurate formation reaction for forming an isocyanurate group and the iminooxadiazinedione formation reaction for forming an iminooxadiazinedione group sequentially or in parallel, in the presence of excessive diisocyanate monomers, and removing an unreacted diisocyanate monomer after the reaction is completed. The polyisocyanate composition can be obtained by mixing resultants obtained by respectively performing two of the reactions.

Among these, in view of ease of availability, a method of performing the two reactions sequentially or in parallel is preferable.

In the method of manufacturing a polyisocyanate composition having an isocyanurate group and an iminooxadiazinedione group in the related art (for example, see Japanese Patent (Granted) Publication No. 5054300 and Japanese Unexamined Patent Application, First Publication No. 2014-214301), it was difficult to increase the ratio (C) of the molar amount of the pentamer (III) with respect to the total molar amount of the pentamer of aliphatic diisocyanate included in the polyisocyanate composition to the lower limit or more.

In contrast, in the polyisocyanate composition according to the present embodiment, by sequentially performing the isocyanurate formation reaction and the iminooxadiazinedione formation reaction, the ratio (C) of the molar amount of the pentamer (III) with respect to the total molar amount of the pentamer of aliphatic diisocyanate included in the polyisocyanate composition can be adjusted to the lower limit or more. As the method of manufacturing the polyisocyanate composition according to the present embodiment, it is preferable to perform the iminooxadiazinedione formation reaction after performing the isocyanurate formation reaction in order to increase the C.

Alcohol such as alkyl monoalcohol and alkyl diol can be used in combination, as an auxiliary raw material. In a case where alcohol is used, as described above, it is preferable to use the alcohol such that the molar ratio (d / (a + b + d)) of the allophanate group / (the isocyanurate group, the iminooxadiazinedione group, and the allophanate group) in the polyisocyanate composition according to the present embodiment is within the above range.

The method of manufacturing a polyisocyanate composition according to the present embodiment is preferably a method of adding a polymerization catalyst to the aliphatic diisocyanate or the auxiliary raw material of the raw material, allowing the reaction to proceed until a predetermined degree, and removing unreacted aliphatic diisocyanate, if necessary, so as to obtain the polyisocyanate composition.

[Method of manufacturing isocyanurate group-containing polyisocyanate]

In a case where an isocyanurate group-containing polyisocyanate is derived from a diisocyanate monomer, generally, a catalyst for the isocyanurate formation reaction is used.

The catalyst for the isocyanurate formation reaction preferably has basicity. Examples of the catalyst for the isocyanurate formation reaction include those provided in 1) to 7) below:

1) hydroxide or an organic weak acid salt of tetraalkylammonium;
2) hydroxide or an organic weak acid salt of hydroxyalkylammonium;
3) a metal salt of alkyl carboxylic acid;
4) metal alcoholate such as sodium and potassium;
5) an aminosilyl group-containing compound such as hexamethyldisilazane;
6) Mannich bases; and
7) a combination of tertiary amines and an epoxy compound.

Examples of the tetraalkylammonium include tetramethylammonium and tetraethylammonium.

Examples of the organic weak acid include acetic acid and capric acid.

Examples of the hydroxyalkylammonium include trimethylhydroxypropylammonium, trimethylhydroxyethylammonium, triethylhydroxypropylammonium, and triethylhydroxyethylammonium.

Examples of the alkyl carboxylic acid include acetic acid, caproic acid, octylic acid, and myristic acid.

Examples of metal constituting a metal salt include tin, zinc, lead, sodium, and potassium.

Among these, in view of catalyst efficiency, the catalyst for the isocyanurate formation reaction is preferably 1), 2), or 3) and more preferably an organic weak acid salt of 1).

An addition amount of the catalyst for the isocyanurate formation reaction is preferably 10 ppm to 1,000 ppm, more preferably 10 ppm to 500 ppm, and even more preferably 10 ppm to 100 ppm or less with respect to the mass of introduced diisocyanate.
The lower limit of the temperature for the isocyanurate formation reaction is preferably 50°C, more preferably 54°C, even more preferably 57°C, and particularly preferably 60°C.
Meanwhile, the upper limit of the temperature for the isocyanurate formation reaction is preferably 120°C, more preferably 100°C, even more preferably 90°C, and particularly preferably 80°C.
The temperature for the isocyanurate formation reaction is preferably 50°C to 120°C, more preferably 54°C to 100°C, even more preferably 57°C to 90°C, and particularly preferably 60°C to 80°C.
In a case where the temperature for the isocyanurate formation reaction is the upper limit or less, characteristic change such as coloration can be more effectively prevented.

[Method of manufacturing iminooxadiazinedione group-containing polyisocyanate]

In a case where iminooxadiazinedione group-containing polyisocyanate is derived from a diisocyanate monomer, generally, a catalyst for the iminooxadiazinedione formation reaction is used.
Examples of the catalyst for forming iminooxadiazinedione include one provided in 1) or 2).

1) Polyfluorohydrogen represented by Formula M $[F_n]$, or Formula M $[F_n(HF)_m]$
(In the formula, m and n are integers satisfying the relation m / n > 0. M is n charged cations (mixture) or one or more radicals which are n-valent in total.)
2) Compound represented by Formula $R^1$-CR'$_2$-C(O)O- or Formula $R^2$=CR'-C(O)O- or compound including a quaternary ammonium cation or a quaternary phosphonium cation.

(In the formula, $R^1$ and $R^2$ each independently represents a linear, branched, or cyclic saturated or unsaturated perfluoroalkyl group having 1 to 30 carbon atoms. A plurality of R's is each independently selected from the group consisting of a hydrogen atom and an alkyl group and an alkyl group having 1 to 20 carbon atoms which may contain a hetero atom.)
Specific examples of the compound ((poly)fluorohydrogen) of 1) include tetramethylammonium fluoride hydrate and tetraethylammonium fluoride.
Specific examples of the compound of 2) include 3,3,3-trifluorocarboxylic acid, 4,4,4,3,3-pentafluorobutanoic acid, 5,5,5,4,4,3,3-heptafluoropentanoic acid, and 3,3-difluoroprop-2-enoic acid.
Among these, as the catalyst for the iminooxadiazinedione formation reaction, 1) is preferable in view of ease of availability, and 2) is preferable in view of stability.
The lower limit of the use amount of the catalyst for forming iminooxadiazinedione is not particularly limited, and in view of reactivity, the lower limit is preferably 5 ppm, more preferably 10 ppm, and even more preferably 20 ppm with respect to aliphatic diisocyanate as a raw material, in terms of molar ratio.
In view of suppression of coloration and discoloration of the product and reaction control, the upper limit of the use amount of the catalyst for forming iminooxadiazinedione is preferably 5,000 ppm, more preferably 2,000 ppm, and even more preferably 500 ppm with respect to aliphatic diisocyanate as a raw material.
The use amount of the catalyst for forming iminooxadiazinedione is preferably 5 ppm to 5,000 ppm, more preferably 10 ppm to 2,000 ppm, and even more preferably 20 ppm to 500 ppm with respect to aliphatic diisocyanate as a raw material.
In view of the reaction rate, the lower limit of the reaction temperature for forming iminooxadiazinedione is not particularly limited, and the lower limit is preferably 40°C, more preferably 50°C, and even more preferably 60°C.
In view of suppression of coloration and discoloration of the product and reaction control, the upper limit of the reaction temperature for forming iminooxadiazinedione is preferably 150°C, more preferably 120°C, and even more preferably 110°C.
That is, the reaction temperature for forming iminooxadiazinedione is preferably 40°C to 150°C, more preferably 50°C to 120°C, and even more preferably 60°C to 110°C.
In a case where the iminooxadiazinedione formation reaction reaches a desired iminooxadiazinedione group content, the iminooxadiazinedione formation reaction can be stopped. For example, the iminooxadiazinedione formation reaction can be stopped by adding the acidic compound to the reaction solution. Examples of the acidic compound include phosphoric acid, acidic phosphoric acid ester, sulfuric acid, hydrochloric acid, and sulfonic acid compounds. Accordingly, the catalyst for the iminooxadiazinedione formation reaction is neutralized or inactivated by heat decomposition, chemical decomposition, or the like. After the reaction is stopped, filtration is performed, if necessary.

[Method of manufacturing allophanate group-containing polyisocyanate]

The allophanate group-containing polyisocyanate can be obtained by adding alcohol to aliphatic diisocyanate and using a catalyst for the allophanate formation reaction. Examples of the alcohol to be used include the same as those exemplified in "Allophanate group".

The amount of alcohol to be added is not limited to the following, but is preferably 10/1 to 1,000/1 and more preferably 100/1 to 1000/1 in terms of the molar ratio between the isocyanate group of aliphatic diisocyanate and the hydroxyl group of the alcohol compound. In a case where the amount is the lower limit or more, it is possible to ensure a more appropriate average number of isocyanate groups with respect to the obtained polyisocyanate.

The catalyst for the allophanate formation reaction is not limited to the following, but examples thereof include alkyl carboxylic acid salt of tin, lead, zinc, bismuth, zirconium, zirconyl, or the like.

Examples of alkyl carboxylic acid salt of tin (organotin compound) include tin 2-ethylhexanoate and dibutyltin dilaurate.

Examples of alkyl carboxylic acid salt of lead (organic lead compound) include lead 2-ethylhexanoate.

Examples of alkyl carboxylic acid salt of zinc (organozinc compound) include zinc 2-ethylhexanoate.

Examples of alkyl carboxylic acid salt of bismuth include bismuth 2-ethylhexano ate.

Examples of alkyl carboxylic acid salt of zirconium include zirconium 2-ethylhexano ate.

Examples of the zirconyl alkylcarboxylate include zirconyl 2-ethylhexanoate.

In a case where the desired yield has been obtained, a deactivator of a catalyst for the allophanate formation reaction such as phosphoric acid and methyl paratoluene sulfonate may be added to stop the allophanate formation reaction.

The amount of the catalyst for the allophanate formation reaction to be added is preferably 10 ppm to 10,000 ppm, more preferably 10 ppm to 1,000 ppm, and even more preferably 10 ppm to 500 ppm in terms of the mass ratio with respect to diisocyanate as a raw material.

The lower limit of the temperature for the allophanate formation reaction is preferably 60°C, more preferably 70°C, even more preferably 80°C, and particularly preferably 90°C.

The upper limit of the temperature for the allophanate formation reaction is preferably 160°C, more preferably 155°C, even more preferably 150°C, and particularly preferably 145°C.

That is, the temperature for the allophanate formation reaction is preferably 60°C to 160°C, more preferably 70°C to 155°C, even more preferably 80°C to 150°C, and particularly preferably 90°C to 145°C.

In a case where the temperature for the allophanate formation reaction is the upper limit or less, the characteristic change of the coloration or the like of the obtained polyisocyanate can be effectively prevented.

The lower limit of the reaction time is preferably 0.2 hours, more preferably 0.4 hours, even more preferably 0.6 hours, particularly preferably 0.8 hours, and most preferably 1.0 hours.

The upper limit of the reaction time is preferably 8 hours or less, more preferably 6 hours, even more preferably 4 hours, particularly preferably 3 hours, and most preferably 2 hours.

That is, the time for allophanate formation reaction is preferably 0.2 hours to 8 hours, more preferably 0.4 hours to 6 hours, even more preferably 0.6 hours to 4 hours, particularly preferably 0.8 hours to 3 hours, and most preferably 1.0 hours to 2 hours.

In a case where the time for allophanate formation reaction is the lower limit or more, the viscosity can be allowed to be lower, and in a case where the time is the upper limit or less, the coloration of polyisocyanate can be further suppressed.

The catalyst for the isocyanurate formation reaction can be used as the catalyst for the allophanate formation reaction. In a case where the allophanate formation reaction is performed with the catalyst for the isocyanurate formation reaction, an isocyanurate-type polyisocyanate is simultaneously formed. In view of improving productivity from the economic point of view, it is preferable to perform the allophanate formation reaction and the isocyanurate formation reaction by using the catalyst for the isocyanurate formation reaction as the catalyst for the allophanate formation reaction.

As the method of manufacturing the polyisocyanate composition according to the present embodiment, the isocyanurate formation reaction and the iminooxadiazinedione formation reaction are performed sequentially or in parallel. Among these, in order to cause the ratio (C) of the molar amount of the pentamer (III) with respect to the total molar amount of the pentamer of aliphatic diisocyanate included in the polyisocyanate composition according to the present embodiment to be in a specific range, as the method of manufacturing the polyisocyanate composition according to the present embodiment, it is preferable to perform the iminooxadiazinedione formation reaction after the isocyanurate formation reaction.

In the method of manufacturing the polyisocyanate composition according to the present embodiment, in a case of accompanying the allophanate formation reaction, in order to simplify the manufacturing step, a method of simultaneously performing the isocyanurate formation reaction and the allophanate formation reaction by using a common catalyst and then performing iminooxadiazinedione formation reaction is preferable.

In a case where the polymerization reaction such as the isocyanurate formation reaction and the iminooxadiazinedione formation reaction reaches a desired polymerization degree, polymerization reaction is stopped.

The stopping of the polymerization reaction is not limited to below, but can be achieved by adding an acidic compound to the reaction solution to neutralize the polymerization reaction catalyst or performing the thermal decomposition, the chemical decomposition, or the like for inactivation. Examples of the acidic compound include phosphoric acid, acidic phosphoric acid ester, sulfuric acid, hydrochloric acid, and sulfonic acid compounds.

After the reaction is stopped, filtration is performed, if necessary.

The reaction solution immediately after the stopping of the reaction generally includes unreacted aliphatic diisocyanate monomer, and thus it is preferable to remove the monomer by a thin film evaporator, extraction, or the like. It is preferable to perform the post-treatment such that the diisocyanate monomer concentration contained in the polyisocyanate composition is controlled to 1 mass% or less.

<Physical properties of polyisocyanate composition>

[Diisocyanate monomer concentration]

The diisocyanate monomer concentration in the polyisocyanate composition according to the present embodiment is preferably 1 mass% or less, more preferably 0.5 mass% or less, even more preferably 0.3 mass%, and particularly preferably 0.2 mass%. In a case where the diisocyanate monomer concentration in the polyisocyanate composition according to the present embodiment is the upper limit or less, the crosslinking properties can be improved.

The diisocyanate monomer concentration in the polyisocyanate composition according to the present embodiment can be measured by the method described in the examples below.

[Viscosity]

The lower limit of the viscosity of the polyisocyanate composition according to the present embodiment at 25°C is preferably 200 mPa·s, more preferably 250 mPa·s, even more preferably 300 mPa·s, still even more preferably 350 mPa·s, and particularly preferably 400 mPa·s.

Meanwhile, the upper limit of the viscosity of the polyisocyanate composition according to the present embodiment at 25°C is 2,000 mPa·s, preferably 1,600 mPa·s, more preferably 1,200 mPa·s, even more preferably 1,000 mPa·s, and particularly preferably 800 mPa·s.

The viscosity of the polyisocyanate composition according to the present embodiment at 25°C is 200 mPa·s to 2,000 mPa·s, preferably 250 mPa·s to 1,600 mPa·s, more preferably 300 mPa·s to 1,200 mPa·s, even more preferably 350 mPa·s to 1,000 mPa·s, and particularly preferably 400 mPa·s to 800 mPa·s.

In a case where the viscosity of the polyisocyanate composition according to the present embodiment at 25°C is the lower limit or more, the crosslinking properties can be improved. Meanwhile, when the viscosity of the polyisocyanate composition according to the present embodiment at 25°C is the upper limit or less, the concentration of solid content of the paint composition including the polyisocyanate composition according to the present embodiment can be increased.

The viscosity of the polyisocyanate composition according to the present embodiment can be measured by using the polyisocyanate composition purified such that a nonvolatile content is 98 mass% or more with an E-type viscometer (manufactured by Tokyo Keiki Inc.). Specifically, the viscosity can be measured by the method described in the examples below.

[Content ratio of isocyanate group (NCO content)]

The lower limit of the content ratio (NCO content ratio) of the isocyanate group of the polyisocyanate composition according to the present embodiment is preferably 21 mass% and more preferably 22 mass%.

The upper limit of the NCO content ratio is preferably 25 mass% and more preferably 24 mass%.

That is, the NCO content ratio is preferably 21 mass% to 25 mass% and more preferably 22 mass% to 24 mass%.

In a case where the NCO content ratio is the lower limit or more, satisfactory physical properties of the coating film such as hardness of the coating film obtained from the polyisocyanate composition according to the present embodiment can be obtained. Meanwhile, in a case where the NCO content ratio is the upper limit or less, the diisocyanate monomer concentration can be more effectively decreased.

The NCO content ratio can be obtained by back titration with IN hydrochloric acid after neutralizing the isocyanate group of the polyisocyanate composition according to the present embodiment with excess 2N amine.

The NCO content ratio is a value with respect to the solid content of the polyisocyanate composition, and the solid content (nonvolatile content) of the polyisocyanate composition can be measured by the method described in the examples described below.

[Number-average molecular weight]

The lower limit of the number-average molecular weight of the solid content in the polyisocyanate composition according to the present embodiment is not particularly limited, and is preferably 400, more preferably 430, even more preferably 460, and particularly preferably 480.
Meanwhile, the upper limit of the number-average molecular weight of the solid content in the polyisocyanate composition according to the present embodiment is not particularly limited, and is preferably 1,000, more preferably 800, even more preferably 700, and particularly preferably 600.
The lower limit of the number-average molecular weight of the solid content in the polyisocyanate composition according to the present embodiment is not particularly limited and is preferably 400 to 1,000, more preferably 430 to 800, even more preferably 460 to 700, and particularly preferably 480 to 600.
When the number-average molecular weight of the solid content in the polyisocyanate composition according to the present embodiment is the lower limit or more, the yield of the obtained polyisocyanate composition is further increased.
Meanwhile, when the number-average molecular weight of the solid content in the polyisocyanate composition according to the present embodiment is the upper limit or less, the gloss of the coating film obtained from the polyisocyanate composition according to the present embodiment tends to further increase.
The number-average molecular weight of the solid content of the polyisocyanate composition according to the present embodiment can be obtained by GPC.

[Yield]

The lower limit of the yield of the polyisocyanate composition according to the present embodiment is not particularly limited, and is preferably 10 mass%, more preferably 12 mass%, and even more preferably 14 mass%.
Meanwhile, the upper limit of the yield of the polyisocyanate composition according to the present embodiment is not particularly limited, and is preferably 40 mass%, more preferably 35 mass%, and even more preferably 30 mass%.
That is, the yield of the polyisocyanate composition according to the present embodiment is not particularly limited, and the yield is preferably 10 mass% to 40 mass%, more preferably 12 mass% to 35 mass%, and even more preferably 14 mass% to 30 mass%.
By causing the yield of the polyisocyanate composition according to the present embodiment to be the lower limit or more, there is a tendency in that the solvent resistance of the coating film obtained from the polyisocyanate composition is futher increased.
Meanwhile, by causing the yield of the polyisocyanate composition according to the present embodiment to be in the upper limit or less, there is a tendency in that the water dispersibility of the polyisocyanate composition further increases.
In a case where the yield of the polyisocyanate composition according to the present embodiment can be obtained by calculating a ratio (mass%) of the mass of the obtained polyisocyanate composition with respect to the mass (in a case where alcohol was used, a total mass of diisocyanate and alcohol) of the mass of diisocyanate used as a raw material.

«Paint composition»

The paint composition according to the present embodiment includes the polyisocyanate composition according to the embodiment above.
The polyisocyanate composition can be suitably used as a curing agent of the paint composition or the like.
The paint composition according to the present embodiment contains a resin component, and the resin component is not particularly limited but preferably contains a compound having two or more active hydrogen atoms having reactivity with the isocyanate group.
The compound having two or more active hydrogen atoms in a molecule is not limited to the following, and examples thereof include polyols, polyamines, and polythiols. The compound having two or more active hydrogen atoms in a molecule may be used singly or two or more kinds thereof may be used in combination.
Among these, the compound having two or more active hydrogen atoms in a molecule is preferably polyol or polyamine.
The polyol is not limited to the following, but specific examples thereof include polyester polyol, polyether polyol, acrylic polyol, polyolefin polyol, and fluorine polyol.
Among these, the polyol is preferably acrylic polyol in view of weather fastness, chemical resistance, and hardness and is preferably polyester polyol, in view of mechanical strength and oil resistance.
Specifically, the polyamine is not limited to the following, but examples thereof include an aspartic acid ester

compound having an amino group.

That is, the paint composition according to the present embodiment preferably includes the polyisocyanate composition, at least any one polyol of acrylic polyol and polyester polyol, or an aspartic acid ester compound having an amino group.

<Polyol>

Polyester polyol

Polyester polyol can be obtained by performing a condensation reaction with dicarboxylic acid singly or a mixture of two or more kinds thereof and polyhydric alcohol or a mixture of two or more kinds thereof.

Examples of the dicarboxylic acid include carboxylic acids such as succinic acid, adipic acid, dimer acid, maleic acid anhydride, phthalic acid anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylol propane diol, and ethoxylated trimethylol propane.

As a specific production method of the polyester polyol, for example, a condensation reaction can be performed by mixing the above components and heating the mixture at about 160°C to 220°C.

Otherwise, for example, polycaprolactones obtained by performing ring-opening polymerization on lactones such as ε-caprolactone with polyhydric alcohol can also be used as the polyester polyol.

The polyester polyol obtained by the above production method can be modified by using aromatic diisocyanate, aliphatic diisocyanate, alicyclic diisocyanate, and compounds obtained from these. Among these, in view of weather fastness and yellowing resistance of the obtained coating film, it is preferable to modify the polyester polyol by using aliphatic diisocyanate, alicyclic diisocyanate, and a compound obtained from these.

In the case where the paint composition according to the present embodiment includes a solvent having a high water content, a portion of the carboxylic acid derived from the dicarboxylic acid or the like in the polyester polyol is allowed to remain and is neutralized with a base such as amine or ammonia, so as to obtain a water-soluble or water-dispersible resin.

[Polyether polyol]

The polyether polyol can be obtained, for example, by any one method of (1) to (3).

(1) A method of using a catalyst by randomly adding or block-adding alkylene oxide singly or a mixture thereof to obtain polyether polyols to a polyvalent hydroxy compound alone or a mixture thereof.
Examples of the catalyst include hydroxides (lithium, sodium, potassium, and the like), a strong basic catalyst (alcoholate, alkyl amine, and the like), a complex metal cyanide compound complex (metal porphyrin, a zinc hexacyanocobaltate complex, and the like).
Examples of the alkylene oxide include ethylene oxide, propylene oxide, butylene oxide, cyclohexene oxide, and styrene oxide.
(2) A method of causing an alkylene oxide and a polyamine compound to react with each other, to obtain polyether polyols.
Examples of the polyamine compound include ethylenediamines.
Examples of the alkylene oxide include those as exemplified in (1).
(3) A method of polymerizing acrylamide or the like with the polyether polyols obtained in (1) or (2) as a medium so as to obtain so-called polymer polyols.

Examples of the polyvalent hydroxy compound include those as provided in (i) to (vi).

(i) diglycerin, ditrimethylolpropane, pentaerythritol, dipentaerythritol, and the like;
(ii) a sugar alcohol-based compound such as erythritol, D-threitol, L-arabinitol, ribitol, xylitol, sorbitol, mannitol, galactitol, and rhamnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose, and melezitose;
(vi) tetrasaccharides such as stachyose

[Acrylic polyol]

The acrylic polyol can be obtained, for example, by polymerizing only a polymerizable monomer having one or more active hydrogen atoms in one molecule, or copolymerizing a polymerizable monomer having one or more active hydrogen atoms in one molecule and another monomer copolymerizable with the polymerizable monomer.
Examples of the polymerizable monomer having one or more active hydrogen atoms in one molecule include those provided in (i) to (vi). These may be used singly or two or more kinds thereof may be used in combination.

(i) acrylic acid esters having active hydrogen such as 2-hydroxyethyl acrylate, 2-hydroxypropyl acrylate, and 2-hydroxybutyl acrylate;
(ii) methacrylic acid esters having active hydrogen such as 2-hydroxyethyl methacrylate, 2-hydroxypropyl methacrylate, 2-hydroxybutyl methacrylate, 3-hydroxypropyl methacrylate, and 4-hydroxybutyl methacrylate;
(iii) (meth)acrylic acid esters having polyvalent active hydrogen such as (meth)acrylic acid monoester of triols such as glycerin and trimethylolpropane;
(iv) monoether of polyether polyols and the above (meth)acrylic acid esters having active hydrogen
Examples of the polyether polyols include polyethylene glycol, polypropylene glycol, and polybutylene glycol;
(v) an adduct of glycidyl (meth)acrylate and a monobasic acid (for example, acetic acid, propionic acid, and p-tert-butylbenzoic acid); and
(vi) an adduct obtained by ring-opening polymerizing lactones with active hydrogens of the (meth)acrylic acid esters having active hydrogen described above

Examples of the lactones include ε-caprolactam and γ-valerolactone.
Examples of the other monomer copolymerizable with the polymerizable monomer include those provided in (i) to (iv). These may be used singly or two or more kinds thereof may be used in combination.

(i) (Meth)acrylic acid esters such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate;
(ii) unsaturated carboxylic acids such as acrylic acid, methacrylic acid, maleic acid, and itaconic acid, unsaturated amides such as acrylamide, N-methylol acrylamide, and diacetone acrylamide;
(iii) a vinyl monomer having a hydrolyzable silyl group such as vinyltrimethoxysilane, vinylmethyldimethoxysilane, and γ-(meth)acrylopropyltrimethoxysilane; and
(iv) other polymerizable monomers such as styrene, vinyl toluene, vinyl acetate, acrylonitrile, and dibutyl fumarate

As a specific method of manufacturing acrylic polyol, for example, acrylic polyol can be obtained by performing solution polymerization on the above monomer in the presence of a well-known radical polymerization initiator such as peroxide or an azo compound and diluting the resultant with an organic solvent or the like, if necessary.
In the case where the paint composition according to the present embodiment includes a solvent having a high water content, the paint composition can be manufactured by a well-known method such as a method of performing solution polymerization on the above monomer and converting the resultant into an aqueous layer or the emulsion polymerization. In that case, it is possible to impart water solubility or water dispersibility to the acrylic polyol by neutralizing an acidic moiety of a carboxylic acid-containing monomer such as acrylic acid and methacrylic acid or a sulfonic acid-containing monomer with amine or ammonia.

[Polyolefin polyol]

Examples of the polyolefin polyol include polybutadiene having two or more hydroxyl groups, hydrogenated polybutadiene having two or more hydroxyl groups, polyisoprene having two or more hydroxyl groups, and hydrogenated polyisoprene having two or more hydroxyl groups.

[Fluorine polyol]

In the present specification, "fluorine polyol" means a polyol including fluorine in the molecule. Specific examples of the fluorine polyol include copolymers such as fluoroolefin, cyclovinyl ether, hydroxy alkyl vinyl ether, and monocarboxylic acid vinyl ester, disclosed in Japanese Unexamined Patent Application, First Publication No. 1982-34107 (reference 1) and Japanese Unexamined Patent Application, First Publication No. 1986-275311 (reference 2).

[Hydroxyl number and acid value of polyol]

The lower limit of the hydroxyl number of polyol is preferably 10 mgKOH/g, more preferably 20 mgKOH/g, and even more preferably 30 mgKOH/g.
The upper limit of the hydroxyl number of polyol is preferably 200 mgKOH/g, more preferably 180 mgKOH/g, and even more preferably 160 mgKOH/g.
That is, the hydroxyl number of polyol is preferably 10 mgKOH/g to 200 mgKOH/g, more preferably 20 mgKOH/g to 180 mgKOH/g, and even more preferably 30 mgKOH/g to 160 mgKOH/g.
In a case where the hydroxyl number of polyol is the lower limit or more, the solvent resistance of the crosslinked coating film obtained from the paint composition according to the present embodiment can be further improved.
In a case where the hydroxyl number of the polyol is the upper limit or less, the pot life after mixture with a polyisocyanate composition can be further improved.
Generally, the expression "pot life" means a time period during which, after a composition is prepared by mixing a main agent and a curing agent in a composition such as paint and adhesive, performances as a composition before curing is secured. It is also called "usable time".
The acid value of the polyol is preferably 0 mgKOH/g to 30 mgKOH/g.
The hydroxyl number and the acid value can be measured in conformity with JIS K1557.
In a case where the paint composition according to the present embodiment includes polyol as a resin component, the paint composition preferably includes the polyisocyanate composition according to the embodiment and at least one of acrylic polyol having a hydroxyl number of 10 mgKOH/g to 200 mgKOH/g or polyester polyol having a hydroxyl number of 10 mgKOH/g to 200 mgKOH/g.

[NCO/OH]

The molar ratio (NCO/OH) of the isocyanate group of the polyisocyanate composition according to the embodiment with respect to a hydroxyl group of the polyol is preferably 0.2 to 5.0, more preferably 0.4 to 3.0, and even more preferably 0.5 to 2.0.
In a case where NCO/OH is the lower limit or more, there is a tendency for a stronger coating film to be obtained. Meanwhile, in a case where NCO/OH is the upper limit or less, there is a tendency for the smoothness of the coating film to be further improved.

<Polyamine>

[Aspartic acid ester compound (V)]

Examples of the aspartic acid ester compound having an amino group exemplified as polyamine include a compound (hereinafter, simply referred to as an "aspartic acid ester compound (V)" in some cases) represented by Formula (V).

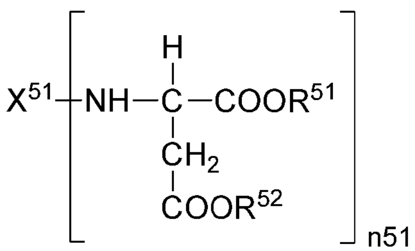

... (V)

($X^{51}$)

In Formula (V), $X^{51}$ is a divalent or higher valent organic group. The valence of $X^{51}$ is 2 or more, preferably 2 to 6 and more preferably 2 to 4.
The divalent or higher valent organic group may be an aliphatic group or may be an aromatic group. The aliphatic group may be any one of linear, branched, or cyclic shapes.
Examples of the linear or branched aliphatic group include an alkanediyl group (alkylene group), an alkylidene group, and an alkylidyne group.
Examples of the cyclic aliphatic group include a cycloalkylene group.

Examples of the aromatic group include an arylene group such as a phenylene group.

In view of yellowing resistance of the paint composition according to the present embodiment, more specifically, $X^{51}$ is preferably a linear, branched, or cyclic divalent aliphatic group having 2 to 20 carbon atoms. Examples of the linear, branched, or cyclic divalent aliphatic group having 2 to 20 carbon atoms include an ethylene group, an n-butylene group, an n-pentylene group, an n-hexylene group, a 2,2,4-trimethylhexamethylene group, a 2,4,4-trimethylhexamethylene group, an n-undecamethylene group, an n-dodecamethylene group, a 3,3,5-trimethyl-5-methylcyclohexylene group, a hexahydrotolylene group, a dicyclohexylmethylene group, a 3,3'-dimethyl dicyclohexyl methylene group, and a 5-methyl dicyclohexyl methylene group.

Among these, $X^{51}$ is preferably an n-butylene group, an n-pentylene group, an n-hexylene group, a 2,2,4-trimethylhexamethylene group, a 2,4,4-trimethylhexamethylene group, a 3,3,5-trimethyl-5-methylcyclohexylene group, a dicyclohexylmethylene group, and a 3,3'-dimethyldicyclohexylmethylene group.

($R^{51}$ and $R^{52}$)

In Formula (V), $R^{51}$ and $R^{52}$ each independently represents an organic group that is inactive to an isocyanate group under the reaction condition.

In the present specification, the expression "inactive to an isocyanate group under the reaction condition" means that $R^{51}$ and $R^{52}$ do not have a Zerewitinoff active hydrogen-containing group (CH acidic compound) such as a hydroxyl group, an amino group or a thiol group.

$R^{51}$ and $R^{52}$ each independently represents and preferably an alkyl group having 1 to 10 carbon atoms and more preferably a methyl group, an ethyl group, a propyl group, or a butyl group.

$R^{51}$ and $R^{52}$ may be identical to or different from each other.

(n51)

In Formula (V), n51 is an integer of 2 or more.

Among them, n51 is preferably an integer of 2 to 6 and more preferably an integer of 2 to 4.

(Method of manufacturing aspartic acid ester compound (V))

The aspartic acid ester compound (V) included in the paint composition according to the present embodiment can be obtained by, for example, reacting primary polyamine (hereinafter, referred to as a "primary polyamine (V-1)" in some cases) represented by Formula (V-1) and maleic acid ester or fumaric acid ester (hereinafter, referred to as a "compound (V-2)" in some cases) represented by Formula (V-2) with each other.

$$X^{51}\text{-}[NH_2]_{n51} \ldots \qquad \text{(V-1)}$$

$$R^{51}OOC\text{-}CH{=}CH\text{-}COOR^{52} \ldots \qquad \text{(V-2)}$$

In Formulae (V-1) and (V-2), $X^{51}$, $R^{51}$, $R^{52}$, and n51 are the same as those in Formula (V).)

The primary polyamine (V-1) is not particularly limited, but examples thereof include divalent or higher valent polyamine.

Examples of the divalent or higher valent polyamine include diamine such as ethylenediamine, 1,2-diaminopropane, 1,4-diaminobutane, 1,5-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminoundecane, 1,12-diaminododecane, 1-amino-3,3,5-trimethyl-5 -aminomethylcyclohexane, 2,4-hexahydrotolylenediamine, 2,6-hexahydrotolylenediamine, 2,4'-diaminodicyclohexylmethane, 4,4'-diaminodicyclohexylmethane, and 3,3'-dimethyl-4,4'-diaminodicyclohexylmethane, 2,4,4'-triamino-5-methyl dicyclohexyl methane, polyether polyamine having a number-average molecular weight of 148 to 6,000 and having a primary amino group aliphatically bonded thereto, but the present invention is not limited thereto.

Among these, divalent or higher valent polyamine is preferably diamine and more preferably 1,4-diaminobutane, 1,5-diaminopentane, 1,6-diaminohexane, 2,2,4-trimethyl-1,6-diaminohexane, 2,4,4-trimethyl-1,6-diaminohexane, 1-amino-3,3,5-trimethyl-5-aminomethylcyclohexane, 4,4' -diaminodicyclohexylmethane, and 3,3'-dimethyl-4,4'-diaminodicyclohexylmethane.

The compound (V-2) is not particularly limited, and examples thereof include dimethyl maleate, diethyl maleate, dibutyl maleate, dimethyl fumarate, diethyl fumarate, and dibutyl fumarate.

In the method of manufacturing an aspartic acid ester compound, the reaction temperature is preferably 0°C to 100°C.

With respect to the formulation ratio of the primary polyamine (V-1) and the maleic acid ester or fumaric acid

ester (V-2), the maleic acid ester or the fumaric acid ester (V-2) may be formulated such that at least one, preferably only one olefinic double bond is present in the primary amino group included in the primary polyamine (V-1).

After the reaction of the primary polyamine (V-1) and the maleic acid ester or fumaric acid ester (V-2) with each other, if necessary, distillation is performed, so as to remove the primary polyamine (V-1) and the maleic acid ester or fumaric acid ester (V-2) which are excessively used.

The reaction of the primary polyamine (V-1) and the maleic acid ester or fumaric acid ester (V-2) can be performed in bulk or in the presence of a suitable solvent. Examples of the suitable solvent include methanol, ethanol, propanol, dioxane, and a mixture thereof.

[NCO/$NH_{2]}$

The molar ratio (NCO / NH2) of the isocyanate group of the polyisocyanate composition according to the embodiment with respect to the amino group of the polyamine is preferably 1/10 to 10/1, more preferably 1/5 to 5/1, and even more preferably 1/2 to 2/1.

In a case where NCO/$NH_2$ is the lower limit or more, the paint composition according to the present embodiment is a polyaspartic paint composition, there is a tendency in that the chemical resistance and the weather fastness of the obtained coating film can be further increased. Meanwhile, in a case where NCO/$NH_2$ is the upper limit or less, there is a tendency in that the curablilty of the paint composition according to the present embodiment can be more satisfactory.

<Other additives>

In addition to the polyisocyanate composition and the resin component, the paint composition according to the present embodiment may contain a melamine-based curing agent such as a completely alkyl type, a methylol type alkyl, an imino group type alkyl, etc., if necessary.

Any of the compound having two or more active hydrogen atoms in a molecule, the polyisocyanate composition according to the above embodiment, and the paint composition according to the present embodiment may contain an organic solvent.

The organic solvent is not particularly limited, but it is preferable not to have a functional group reactive with a hydroxyl group and an isocyanate group, and it is preferable to be sufficiently compatible with the polyisocyanate composition. These organic solvent are not limited to the following, but examples thereof include an ester compound, an ether compound, a ketone compound, an aromatic compound, an ethylene glycol dialkyl ether-based compound, a polyethylene glycol dicarboxylate-based compound, a hydrocarbon-based solvent, and an aromatic solvent, which are generally used as a paint solvent.

Any of the compound having two or more active hydrogen atoms in a molecule, the polyisocyanate composition according to the above embodiment, and the paint composition according to the present embodiment may be used in a mixture with various additives that are used in the technical field such as a catalyst for accelerating curing, a pigment, a leveling agent, an antioxidant, an ultraviolet-absorbing agent, a light stabilizer, a plasticizer, and a surfactant, in a range that does not deteriorate a desired effect according to the present embodiment, according to purposes or applications.

[Catalyst for accelerating curing]

The catalyst for acceleration of curing is not limited to the following, but examples thereof include metal salt and tertiary amines.

Examples of the metal salt include dibutyltin dilaurate, tin 2-ethylhexanoate, zinc 2-ethylhexanoate, and cobalt salt.

Examples of the tertiary amines include triethylamine, pyridine, methylpyridine, benzyldimethylamine, N,N-dimethylcyclohexylamine, N-methylpiperidine, pentamethyldiethylenetriamine, N,N'-endethylenepiperazine, and N,N'-dimethylpiperazine.

[Pigment]

Examples of the pigment include titanium oxide, carbon black, indigo, quinacridone, and pearl mica.

[Leveling agent]

The leveling agent is not particularly limited, but examples thereof include silicone, aerosil, wax, stearic acid salt, and polysiloxane.

[Antioxidant, ultraviolet-absorbing agent, and light stabilizer]

Examples of an antioxidant, an ultraviolet-absorbing agent, and a light stabilizer include aliphatic, aromatic or alkyl-substituted aromatic esters of phosphoric acid or phosphorous acid, a hypophosphorous acid derivative, a phosphorus compound, a phenolic derivative (particularly, hindered phenol compound), a compound including sulfur, and a tin-based compound. These may be contained singly, or two or more kinds thereof may be contained.
Examples of the phosphorus compound include phenylphosphonic acid, phenylphosphinic acid, diphenylphosphonic acid, polyphosphonate, dialkylpentaerythritol diphosphite, dialkylbisphenol A diphosphite.
Examples of the compound including sulfur include a thioether-based compound, a dithioate-based compound, a mercaptobenzimidazole-based compound, a thiocarbanilide-based compound, and a thiodipropionate ester.
Examples of the tin compound include tin maleate and dibutyltin monoxide.

[Plasticizer]

The plasticizer is not particularly limited, but examples thereof include phthalic acid esters, phosphoric acid esters, fatty acid esters, pyromellitic acid ester, an epoxy-based plasticizer, a polyether-based plasticizer, liquid rubber, and nonaromatic paraffin oil.
Examples of the phthalic acid esters include dioctyl phthalate, dibutyl phthalate, diethyl phthalate, butyl benzyl phthalate, di-2-ethylhexyl phthalate, diisodecyl phthalate, diundecyl phthalate, and diisononyl phthalate.
Examples of the phosphate esters include tricresyl phosphate, triethyl phosphate, tributyl phosphate, tri-2-ethylhexyl phosphate, trimethylhexyl phosphate, tris-chloroethyl phosphate, and tris-dichloropropyl phosphate.
Examples of the fatty acid esters include octyl trimellitate, isodecyl trimellitate, trimellitic esters, dipentaerythritol esters, dioctyl adipate, dimethyl adipate, di-2-ethylhexyl azelate, dioctyl azelate, dioctyl sebacate, di-2-ethylhexyl sebacate, and methyl acetyl ricinocate.
Examples of the pyromellitic acid ester include pyromellitic acid octyl ester.
Examples of the epoxy-based plasticizer include epoxidized soybean oil, epoxidized linseed oil, and epoxidized fatty acid alkyl ester.
Examples of the polyether-based plasticizer include adipic acid ether ester and polyether.
Examples of the liquid rubber include liquid NBR, liquid acrylic rubber, and liquid polybutadiene.

[Surfactant]

Examples of the surfactant include a well-known anionic surfactant, a cationic surfactant, and an amphoteric surfactant.

<Method of manufacturing paint composition>

The paint composition according to the present embodiment can be used for any non-solvent-based paint compositions such as a solvent-based, aqueous, and polyaspartic paint compositions.
In a case where the paint composition according to the present embodiment is a solvent-based paint composition, for example, first, the polyisocyanate composition is added, as the curing agent, to those obtained by adding other additives such as other resins, a catalyst, a pigment, a leveling agent, an antioxidant, an ultraviolet-absorbing agent, a light stabilizer, a plasticizer, and a surfactant to a resin containing a compound having two or more active hydrogen atoms in a molecule or a solvent dilution thereof, if necessary. Subsequently, if necessary, a solvent is further added to adjust the viscosity. Subsequently, a solvent-based paint composition can be obtained by hand stirring or stirring with a stirring device such as MAZELAR.
In a case where the paint composition according to the present embodiment is an aqueous paint composition, for example, first, the polyisocyanate composition is added, as the curing agent, to those obtained by adding other additives such as other resins, a catalyst, a pigment, a leveling agent, an antioxidant, an ultraviolet-absorbing agent, a light stabilizer, a plasticizer, and a surfactant to an aqueous dispersion or an aqueous substance of a resin containing a compound having two or more active hydrogen atoms in a molecule, if necessary. Subsequently, if necessary, water or a solvent is further added to adjust the viscosity. Subsequently, by forcibly stirring with a stirring device, an aqueous paint composition can be obtained.
In a case where the paint composition according to the present embodiment is a non-solvent-based paint composition, polyol or polyamine that can be used in a non-solvent system as a main agent can be used. Among these, since the viscosity of the opponent compound of the reaction of polyisocyanate is remarkably low, it is preferable to use a polyaspartic compound having an amino group as the main agent. For example, firstly, the polyisocyanate composition is added as a curing agent, to those obtained by adding an additive such as another resin, a catalyst, a pigment, a

leveling agent, an antioxidant, an ultraviolet-absorbing agent, a light stabilizer, a plasticizer, and a surfactant, if necessary, to the polyaspartic compound having an amino group that is a main agent. Subsequently, by forcibly stirring with a stirring device, a non-solvent-based paint composition can be obtained.

<Usage application of paint composition>

The paint composition according to the present embodiment is not limited to the following, but can be used, for example, as paint for roll coating, curtain flow coating, spray coating, bell coating, electrostatic coating, or the like. For example, the paint composition is also useful as a primer or mid-intermediate coating for a material such as metal (steel plate, steel sheet, surface-treated steel sheet, or the like), plastic, wood, a film, and an inorganic material. The paint composition is also useful as paint for imparting cosmetic properties, weather fastness, acid resistance properties, rust prevention, chipping resistance, and the like to precoated metal, automobile coating, or the like which includes rust prevention steel plates and steel sheets, and the like. The paint composition is also useful as a urethane raw material for an adhesive, a pressure sensitive adhesive, an elastomer, a foam, a surface treatment agent, or the like.

«Coating film»

The coating film according to the present embodiment is obtained by curing the paint composition according to the above embodiment.

Since the coating film according to the present embodiment is obtained by curing the paint composition, the coating film always exhibits stable quality and has excellent water resistance and excellent weather fastness.

<Method of manufacturing coating film>

The method of manufacturing the coating film according to the present embodiment is a method including a step of curing the paint composition according to the above embodiment.

The coating film according to the present embodiment can be manufactured by coating a material to be coated with the paint composition by using a well-known coating method such as roll coating, curtain flow coating, spray coating, bell coating, and electrostatic coating and then curing the paint composition.

Examples of the material to be coated include the materials exemplified in "Usage application of paint composition".

Examples

Hereinafter, the present embodiment is specifically described based on examples and comparative examples, but the present embodiment is not limited to the examples at all.

Respective physical properties of the polyisocyanate composition in examples and comparative examples were measured as below. Respective evaluations of the paint composition and the coating film were performed by the methods below. Unless particularly described, a "part" and "%" mean a "part by mass" and "mass%".

<Method of measuring physical properties>

[Physical property 1] Viscosity

The viscosity of a polyisocyanate composition as a sample was measured at 25°C by using an E-type viscometer (manufactured by Tokyo Keiki Inc.). For the measurement, a standard rotor (1°34' × R24) was used. The rotation speed was as below. The nonvolatile contents of the respective polyisocyanate compositions manufactured in the examples and the comparative examples described below were investigated by the method described in "[Physical Property 2]" described below and those having a value of 98 mass% or more were used for measurement.

(Rotation speed)

100 rpm (in a case of less than 128 mPa·s)
50 rpm (in a case of 128 mPa·s or more and less than 256 mPa·s)
20 rpm (in a case of 256 mPa·s or more and less than 640 mPa·s)
10 rpm (in a case of 640 mPa·s or more and less than 1,280 mPa·s)

5.0 rpm (in a case of 1,280 mPa·s or more and less than 2,560 mPa·s)

[Physical property 2] Nonvolatile content

The polyisocyanate composition was used as a sample, a mass of the aluminum cup was precisely weighed, about 1 g of the sample was introduced, and a mass of the cup before heat drying was precisely weighed. The cup containing the sample was heated in a dryer at 105°C for three hours. The cup after heating was cooled to room temperature, and the mass of the cup was precisely weighed again. Mass% of the dry residue in the sample was taken as the nonvolatile content. The calculation method of the nonvolatile content was as follows. In the case of no solvent dilution, the nonvolatile content was assumed to be substantially 100%.

$$\text{Nonvolatile content (mass\%)} = (\text{a mass of a cup after heat drying - a mass of an aluminum cup}) / (\text{a mass of a cup before heat drying - a mass of an aluminum cup}) \times 100\%$$

[Physical property 3] Isocyanate group content ratio (NCO content ratio)

The isocyanate group content ratio (NCO content ratio) (mass%) was obtained by back titration with IN hydrochloric acid after the isocyanate groups in each polyisocyanate composition were neutralized with an excess of 2N amine. The nonvolatile contents of the respective polyisocyanate compositions were investigated by the method described in "Physical property 2", and those having a value of 98 mass% were measured without change.

[Physical Property 4] HDI monomer mass concentration

First, a 20 mL sample bottle was placed on a digital balance, and about 1 g of the polyisocyanate composition as a sample was precisely weighed. Subsequently, 0.03 g to 0.04 g of nitrobenzene (internal standard solution) was added and precisely weighed. About 9 mL of ethyl acetate was added, the mixture was mixed well with the lid tightly closed, and the sample was prepared. Gas chromatography analysis was performed on the above prepared liquid under the following conditions so as to weigh the HDI monomer in the sample.

(Measurement condition)

Device: GC-8A manufactured by Shimadzu Corporation
Column: Silicone OV-17 manufactured by Shinwa Chemical Industries Ltd.
Column oven temperature: 120°C
Injection / detector temperature: 160°C

[Physical Properties 5] Molar ratio of each polymer

(1) Measurement of the molar amount of each polymer

The abundance ratio (molar ratio) of each polymer included in the polyisocyanate composition was used in accordance by the following method. Each polymer included in the polyisocyanate composition was defined as below.

(Trimer)

An isocyanurate trimer (hereinafter, referred to as a "compound $\alpha$" in some cases) obtained by polymerizing three 1,6-isocyanatohexane (HDI)
An iminooxadiazinedione trimer (hereinafter, referred to as a "compound $\beta$" in some cases) obtained by polymerizing three HDI

(Pentamer)

An isocyanurate-isocyanurate pentamer (hereinafter, referred to as a "compound γ" in some cases) obtained by polymerizing five HDI
An isocyanurate-iminooxadiazinedione pentamer (hereinafter, referred to as a "compound δ" in some cases) obtained by polymerizing five HDI
An iminooxadiazinedione-iminooxadiazinedione pentamer (hereinafter, referred to as a "compound ε" in some cases) obtained by polymerizing five HDI

Specifically, the terminal isocyanate groups of the compounds α, β, γ, δ, and ε in the polyisocyanate composition were substituted with ethanol, and these are analyzed by liquid chromatography-mass spectrometry (LC / MS). The preparation method and measurement method of the sample are as below.

(1-1) Method of preparing sample

100 mg of each polyisocyanate composition was weighed and ethanol was added so as to be 10 mg/mL. Thereafter, the mixture was left for 24 hours, and the isocyanate group present in each polyisocyanate composition was allowed to completely react with ethanol, so as to prepare an ethanol solution.

(1-2) Method of measuring LC

The ethanol solution prepared in (1-1) was measured using the following device.

(Liquid chromatographic condition (LC condition))

Device: Waters UPLC
Column: Waters ACQUITY UPLC HSS C18 1.8 μm (2.1 mm I.D. × 50 mm)
Column temperature: 40°C
Detection: 200 nm
Flow rate: 0.3 mL / min
Mobile phase: Hereinafter, gradient of A and B liquid
A = Water (0.1% formic acid), B = Acetonitrile (0.1% formic acid)
Injection amount: 0.2 μL

(Mass analysis conditions (MS conditions))

Device: Waters, Synapt G2
Ionization: ESI
Mode: Positive
Scan range: m / z100 to 2,000

The ethanol adduct of the compound α was detected at a retention time of 6.65 minutes with a detected ion (m / z) of 643.4.
An ethanol adduct of the compound β was detected at retention time of 6.97 minutes at a detection ion (m / z) 643.4.
The ethanol adduct of the compound γ was detected at a retention time of 7.76 minutes at a detection ion (m / z) 1025.6.
The ethanol adduct of the compound δ was detected at a retention time of 8.01 minutes at a detection ion (m / z) 1025.6.
The ethanol adduct of the compound ε was detected at a retention time of 8.22 minutes at a detection ion (m / z) 1025.6.

(2) Weighing a ratio (A / (A + B)) of the molar amount (A) of the isocyanurate trimer (I) with respect to the total molar amount (A + B) of the molar amount (A) of the isocyanurate trimer (I) and the molar amount (B) of the iminooxadiazinedione trimer (II)

A/(A+B) was weighed by calculating a ratio ($\alpha$) / ($\alpha$ + $\beta$) of an area of the ethanol adduct of the compound $\alpha$ with respect to the total area of the ethanol adduct of the compound $\alpha$ and the ethanol adduct of the compound $\beta$ by using each peak area value weighed by weighing (1).

(3) Weighing of the ratio (C) of the molar amount of the pentamer (III) with respect to the total molar amount of the pentamer of aliphatic diisocyanate included in the polyisocyanate composition

The ratio (C) of the pentamer (III) with respect to the total molar amount of the pentamer of aliphatic diisocyanate included in the polyisocyanate composition is weighed by using each peak area value weighed in (1) as a molar amount and calculating a ratio ($\delta$)/($\gamma$+$\delta$+$\varepsilon$) of the area of the ethanol adduct of the compound $\delta$ with respect to the total area of the ethanol adduct of the compound $\gamma$, the ethanol adduct of the compound $\delta$, and the ethanol adduct of the compound $\varepsilon$.

[Physical Property 6] Molar ratio of various functional groups in polyisocyanate composition

(1) Measurement of molar amount of various functional groups

Each of the molar amounts of the isocyanurate group, the iminooxadiazinedione group, and the allophanate group was measured by $^{13}$C-NMR by using Biospin Avance 600 (trade name) manufactured by Bruker Corporation. Specific measurement conditions were as follows.

(Measurement conditions of $^{13}$C-NMR device)

$^{13}$C-NMR device: AVANCE 600 (manufactured by Bruker Corporation) Cryoprobe (manufactured by Bruker Corporation)
Cryo Probe (295K)
CPDUL
600S3-C/H-D-05Z
Resonance frequency: 150MHz
Concentration: 60 wt/vol%
Shift criteria: $CDCl_3$ (77 ppm)
Number of integrations: 10,000 times
Pulse program: zgpg 30 (proton complete decoupling method)
Pulse wait time: 2 sec

In the above measurement, the integral value of the following signals was divided by the number of carbons being measured and each molar amount was determined from the value.

Isocyanurate group: Integral value around 148.6 ppm / 3
Iminooxadiazinedione group: Integral value around 137.3 ppm / 1
Allophanate group: Integral value around 154 ppm / 1

(2) Calculation of a ratio (d / (a + b + d)) of the molar amount (d) of the allophanate group with respect to the total molar amount (a + b + d) of the molar amount (a) of the isocyanurate group, the molar amount (b) of the iminooxadiazinedione group, and the molar amount (d) of the allophanate group

d / (a + b + d) was calculated by using the molar amounts of each functional group obtained in (1).

[Physical Property 7] Yield

The yield of each polyisocyanate composition was obtained by calculating a ratio (mass%) of the mass of the obtained polyisocyanate composition with respect to the mass (in a case of using alcohol, a total mass of diisocyanate and alcohol) of the diisocyanate used in the raw material.

<Method of evaluating paint composition and coating film>

[Manufacturing of aqueous paint composition]

The aqueous paint composition was manufactured with each polyisocyanate composition as follows.

Specifically, first, "Setaqua6515" (dispersion type of acrylic polyol, trade name of Allnex, solid content: 45 mass%, hydroxyl group: 3.3 mass%/resin g) and each of polyisocyanate composition diluted to 65 mass% by using butyl glycol acetate were mixed with stirring blades at 600 rpm with stirring such that NCO / OH = 1.3. Thereafter, each aqueous paint composition was obtained by performing dilution with deionized water such that the solid content in the paint composition was 40 mass%.

[Manufacturing of polyaspartic paint composition]

The polyaspartic paint composition was manufactured as below with each polyisocyanate composition as follows.

Specifically, first, "Desmophen 1420" (aspartic acid ester compound, trade name of Covestro AG, amine value: 201 mgKOH/resin g) and "Desmophen 1520" (aspartic acid ester compound, trade name of Covestro AG, amine value: 191 mgKOH/resin g) were blended in advance by a weight ratio of 1/1. The blended aspartic acid ester compound and each polyisocyanate composition were formulated such that NCO / NH = 1.1, so as to obtain each polyaspartic paint composition.

[Evaluation 1] Water dispersibility

A glass plate was coated with each of the aqueous paint compositions such that the dry film thickness was 40 μm by an applicator and was set, and then baking was performed at 100°C for one hour, so as to obtain a dried coating film. Subsequently, the 20° gloss of the obtained dried coating film was measured. As the evaluation standard, the case where the 20° gloss was 80% or more was A, the case where the 20° gloss was 75% or more and less than 80% was B, and the case where the 20° gloss was less than 75% was C.

[Evaluation 2] Solvent resistance

A rubbing test was performed on a dry coating film used in the above "Evaluation 1" with a cotton swab soaked with a xylene / ethanol = 50/50 solution, and an observed number of times the dissolution of the coating film was measured. As the evaluation standard, the case where the dissolution was not observed even in a case where the rubbing test was performed 50 times or more was "A", the case where the dissolution was observed in a case where the rubbing test was performed 35 times or more and less than 50 times was "B", and the case where the dissolution was observed in a case where the rubbing test was performed less than 35 times was "C".

[Evaluation 3] Weather fastness

First, a substrate was prepared. Specifically, on an aluminum plate was spray-coated with a commercially available solvent-based two-solution acrylic urethane white enamel paint in advance, and the aluminum plate was set and baked at 80°C for two hours. Subsequently, culturing was performed at room temperature for two weeks or longer, and the surface was polished with sandpaper #1000 until the 60-degree gloss value became 10% or less, so as to obtain a white plate substrate. Subsequently, the obtained white plate base material was coated with each of the polyaspartic paint compositions described above by using an applicator such that a dry film thickness was 80 to 100 μm, and the polyaspartic paint compositions were dried at 100°C for 30 minutes so as to obtain a cured coating film. Thereafter, the gloss retention was measured in conformity with JIS K5600-7-8 by using DEWPANEL LIGHT CONTROL WEATHER METER FDP manufactured by Suga Test Instruments Co., Ltd. The evaluation standards are as provided below.

(Evaluation standard)

A: 60° gloss retention after exposure for 1,400 hours was 90% or more
B: 60° gloss retention after exposure for 1,400 hours was 80% or more and less than 90%
C: 60° gloss retention after exposure for 1,400 hours was less than 80%

<Manufacturing of catalyst for the iminooxadiazinedione formation reaction >

[Manufacturing Example 1] Manufacturing of catalyst for the iminooxadiazinedione formation reaction

A four-necked flask equipped with a stirrer, a thermometer, a reflux cooling pipe, a nitrogen-blowing tube, and a dropping funnel was placed in a nitrogen atmosphere, 5 g of 3,3,3-trifluoropropanoic acid were dissolved in 1 mL of methanol under stirring. Subsequently, a methanol solution (7 g) containing sodium methoxide at a concentration of 30 mass% was dropwise added. Subsequently, while gently heating, a white emulsion was formed. After stirring for 30 minutes, 10 mL of methanol was added, and then an isopropanol solution (16.3 g) containing tetrabutylphosphonium chloride at a concentration of 70 mass% concentration was dropwise added. After stirring at room temperature for two hours, the mixture was filtered (with a 200 μm filter plate). Subsequently, the precipitate remaining on the filter plate was repeatedly washed with methanol. Subsequently, the combined filtrate was concentrated under vacuum at 10 mbar at room temperature. Subsequently, the obtained concentrate was measured by $^1$H-NMR spectroscopy to find that a $CF_3CH_2CO_2^-Bu_4P^+$ content in the concentrate was 92 mass%. 2% isopropanol and 6% methanol were detected in the concentrate. In a case where the concentrate was measured by $^{19}$F-NMR spectroscopy, the only visible signal was a signal of a $CF_3$ group at -63.3 ppm.

<Manufacturing of polyisocyanate composition>

[Example 1] Manufacturing of polyisocyanate composition P-1

A four-necked flask equipped with a stirrer, a thermometer, a reflux cooling pipe, a nitrogen-blowing tube, and a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 45.9 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction (selectivity of isocyanurate group / iminooxadiazinedione group: 50 mol% / 50 mol%) was performed. In a case where a NCO content ratio of the reaction solution was 44.1 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-1. The obtained polyisocyanate composition P-1 had a nonvolatile content of 99.5 mass%, a viscosity of 800 mPa·s (25°C), a NCO content ratio of 23.3 mass%, a HDI monomer concentration of 0.15 mass%, and a yield of 22 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 2] Manufacturing of polyisocyanate composition P-2

A four-necked flask equipped with a stirrer, a thermometer, a reflux cooling pipe, a nitrogen-blowing tube, and a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 48.8 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 44.4 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-2. The obtained polyisocyanate composition P-2 had a nonvolatile content of 99.5 mass%, a viscosity of 630 mPa·s (25°C), a NCO content ratio of 23.3

mass%, a HDI monomer concentration of 0.14 mass%, and a yield of 21 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 3] Manufacturing of polyisocyanate composition P-3

A four-necked flask equipped with a stirrer, a thermometer, a reflux cooling pipe, a nitrogen-blowing tube, and a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 47.9 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 44.4 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-3. The obtained polyisocyanate composition P-3 had a nonvolatile content of 99.5 mass%, a viscosity of 700 mPa·s (25°C), a NCO content ratio of 23.2 mass%, a HDI monomer concentration of 0.16 mass%, and a yield of 21 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 4] Manufacturing of polyisocyanate composition P-4

A polyisocyanate composition P-4 was obtained in the same manner as in Example 3 except that the iminooxadiazine dione formation reaction was performed at 45°C. The obtained polyisocyanate composition P-4 had a nonvolatile content of 99.4 mass%, a viscosity of 670 mPa·s (25°C), a NCO content ratio of 23.2 mass%, a HDI monomer concentration of 0.15 mass%, and a yield of 21 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 5] Manufacturing of polyisocyanate composition P-5

A four-necked flask equipped with a stirrer, a thermometer, a reflux cooling pipe, a nitrogen-blowing tube, and a dropping funnel was placed in a nitrogen atmosphere, 6,000 g of HDI and 50g of isobutanol were introduced, and the temperature inside the reactor was maintained at 80°C for two hours under stirring. Thereafter, 5.0 g of a solution obtained by diluting an isocyanurate forming catalyst, trimethyl-2-methyl-2-hydroxyethylammonium hydroxide with 5 mass% of isobutanol was added so as to perform the isocyanurate formation reaction. Subsequently, in a case where the NCO content ratio of the reaction solution was 43.7 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 41.7 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-5. The obtained polyisocyanate

composition P-5 had a nonvolatile content of 99.5 mass%, a viscosity of 650 mPa·s (25°C), a NCO content ratio of 22.3 mass%, a HDI monomer concentration of 0.10 mass%, and a yield of 30 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 6] Manufacturing of polyisocyanate composition P-6

A four-necked flask equipped with a stirrer, a thermometer, a reflux cooling pipe, a nitrogen-blowing tube, and a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 47.3 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 43.3 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-6. The obtained polyisocyanate composition P-6 had a nonvolatile content of 99.6 mass%, a viscosity of 1,100 mPa·s (25°C), a NCO content ratio of 23.0 mass%, a HDI monomer concentration of 0.12 mass%, and a yield of 25 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Example 7] Manufacturing of polyisocyanate composition P-7

A four-necked flask equipped with a stirrer, a thermometer, a reflux cooling pipe, a nitrogen-blowing tube, and a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 48.7 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 46.0 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-7. The obtained polyisocyanate composition P-7 had a nonvolatile content of 99.3 mass%, a viscosity of 480 mPa·s (25°C), a NCO content ratio of 23.3 mass%, a HDI monomer concentration of 0.17 mass%, and a yield of 15 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Comparative Example 1] Manufacturing of polyisocyanate composition P-8

A four-necked flask equipped with a stirrer, a thermometer, a reflux cooling pipe, a nitrogen-blowing tube, and

a dropping funnel was placed in a nitrogen atmosphere, 6,000 g of HDI and 5g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 46.1 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 45.7 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-8. The obtained polyisocyanate composition P-8 had a nonvolatile content of 99.5 mass%, a viscosity of 600 mPa·s (25°C), a NCO content ratio of 23.2 mass%, a HDI monomer concentration of 0.17 mass%, and a yield of 16 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Comparative Example 2] Manufacturing of polyisocyanate composition P-9

A four-necked flask equipped with a stirrer, a thermometer, a reflux cooling pipe, a nitrogen-blowing tube, and a dropping funnel was placed in a nitrogen atmosphere, 6,000 g of HDI was introduced, and the temperature inside the reactor was maintained at 80°C for two hours under stirring. The reaction inside temperature was cooled to 50°C, and 22.6 g of $CF_3(CF_2)_2C(CF_3)_2CH_2CO_2^-Bu_4P^+$ (containing 2% isopropanol and 6% methanol) manufactured was added, and an iminooxadiazinedione formation reaction (selectivity of isocyanurate group / iminooxadiazinedione group: 61 mol% / 39 mol%) was performed. In a case where a NCO content ratio of the reaction solution was 44.4 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-9. The obtained polyisocyanate composition P-9 had a nonvolatile content of 99.4 mass%, a viscosity of 620 mPa·s (25°C), a NCO content ratio of 23.3 mass%, a HDI monomer concentration of 0.16 mass%, and a yield of 21 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Comparative Example 3] Manufacturing of polyisocyanate composition P-10

A four-necked flask equipped with a stirrer, a thermometer, a reflux cooling pipe, a nitrogen-blowing tube, and a dropping funnel was placed in a nitrogen atmosphere, 6,000 g of HDI and 65g of isobutanol were introduced, and the temperature inside the reactor was maintained at 80°C for two hours under stirring. Thereafter, 5.0 g of a solution obtained by diluting an isocyanurate-forming catalyst of trimethyl-2-methyl-2-hydroxyethylammonium hydroxide with isobutanol so as to be 5 mass% was added to perform the isocyanurate formation reaction. Subsequently, in a case where the NCO content ratio of the reaction solution was 41.0 mass%, 0.36 g of dibutyl phosphate was added to stop the isocyanurate formation reaction. The reaction inside temperature was cooled to 50°C, and 13.8 g of a 92% solution (containing 2% isopropanol and 6% methanol) of $CF_3CH_2CO_2^-Bu_4P^+$ manufactured in Manufacturing Example 1 was added, and an iminooxadiazinedione formation reaction was performed. In a case where a NCO content ratio of the reaction solution was 40.4 mass%, an isopropanol solution (14.4 g) containing a 40 mass% concentration of p-toluenesulfonic acid was added, so as to stop the reaction. Subsequently, purification was performed twice with a thin film evaporator under conditions of 160°C and 0.2 Torr so as to obtain the polyisocyanate composition P-10. The obtained polyisocyanate composition P-10 had a nonvolatile content of 99.6 mass%, a viscosity of 550 mPa·s (25°C), a NCO content ratio of 21.7 mass%, a HDI monomer concentration of 0.09 mass%, and a yield of 34 mass%.

"A / (A + B)" and "C" were measured by LC-MS measurement. "d / (a + b + d)" was measured by $^{13}$C-NMR. The obtained results are presented in Table 1.

An aqueous paint composition, a polyaspartic paint composition, and a coating film thereof were manufactured by the above method with the obtained polyisocyanate composition, and the water dispersibility and the solvent resistance of the aqueous paint composition and weather fastness of the polyaspartic paint composition were evaluated. The obtained results are presented in Table 1.

[Table 1]

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Polyisocyanate composition | | P-1 | P-2 | P-3 | P-4 | P-5 | P-6 | P-7 | P-8 | P-9 | P-10 |
| Physical properties | A/(A + B) | 0.85 | 0.61 | 0.69 | 0.69 | 0.95 | 0.69 | 0.69 | 0.96 | 0.61 | 0.96 |
| | A × B × 2 × 0.9 | 0.23 | 0.43 | 0.39 | 0.39 | 0.23 | 0.39 | 0.39 | 0.07 | 0.43 | 0.07 |
| | C | 0.26 | 0.48 | 0.43 | 0.48 | 0.26 | 0.43 | 0.42 | 0.08 | 0.38 | 0.08 |
| | d / (a + b +d) | 0.05 | 0.06 | 0.06 | 0.06 | 0.15 | 0.03 | 0.08 | 0.08 | 0.06 | 0.20 |
| | Yield (mass%) | 22 | 21 | 21 | 21 | 30 | 25 | 15 | 16 | 21 | 34 |
| | Viscosity (mPa·s/25°C) | 800 | 630 | 700 | 670 | 650 | 1100 | 480 | 600 | 620 | 550 |
| | NCO content (mass%) | 23.3 | 23.3 | 23.2 | 23.2 | 22.3 | 23.0 | 23.3 | 23.2 | 23.3 | 21.7 |
| Evaluation | Water dispersibility | B | A | A | A | B | B | A | C | A | B |
| | Solvent resistance | A | A | A | A | B | A | B | - | A | C |
| | Weather fastness | A | B | B | A | B | B | B | B | C | C |

From Table 1, the polyisocyanate compositions P-1 to P-7 (Examples 1 to 7) are excellent water dispersibility and excellent solvent resistance of a coating film in a case of being used in an aqueous paint composition, and excellent weather fastness of the coating film in a case of being used in the polyaspartic paint composition.

Meanwhile, with respect to the polyisocyanate compositions P-8 to P-10 (Comparative Examples 1 to 3), not all of water dispersibility and solvent resistance in a case of being formed into an aqueous paint composition and weather fastness of the coating film in a case of being formed into a polyaspartic paint composition were excellent.

In the polyisocyanate compositions P-1 to P-4 and P-6 (Examples 1 to 4 and 6) in which d / (a + b + d) are 0.04 or less, there is a tendency in that the solvent resistance of the coating film in a case of being used in the aqueous paint composition was more excellent than in the polyisocyanate compositions P-5 and P-7 (Examples 5 and 7) in which d / (a + b + d) was 0.07 or more.

In the polyisocyanate composition P-4 (Example 4) in which the iminooxadiazine dione formation reaction was performed at 45°C, all of the water dispersibility and the solvent resistance of the coating film in a case of being formed into an aqueous paint composition and the weather fastness of the coating film in a case of being formed into a polyaspartic paint composition were particularly excellent.

INDUSTRIAL APPLICABILITY

The polyisocyanate composition according to the present embodiment can be used in any of the solvent-based paint composition, the aqueous paint composition, and the no-solvent-based paint composition, as a curing agent. The paint composition according to the present embodiment can be used as a paint for roll coating, curtain flow coating, spray coating, bell coating, and electrostatic coating and the like, as the curing agent component. The paint composition according to the present embodiment can be used as a primer or mid-intermediate coating for a material such as metal such as a steel plate, a steel sheet, a surface-treated steel sheet, plastic, wood, a film, and an inorganic material. The paint composition according to the present embodiment is also useful as paint for imparting heat resistance, cosmetic properties (surface smoothness and sharpness) to precoated metal, automobile coating, or the like which includes rust prevention steel plates and steel sheets. The paint composition according to the present embodiment is also useful as a urethane raw material for an adhesive, a pressure sensitive adhesive, an elastomer, a foam, a surface treatment agent, or the like.

**Claims**

1. A polyisocyanate composition that is obtained from aliphatic diisocyanate including 1,6-diisocyanatohexane, the composition comprising:

an isocyanurate group; and
an iminooxadiazinedione group,
wherein a ratio (A / (A + B)) of a molar amount (A) of an isocyanurate trimer represented by Formula (I) with respect to a total molar amount (A + B) of the molar amount (A) of the isocyanurate trimer and a molar amount (B) of iminooxadiazinedione trimer represented by Formula (II) is 0.1 to 0.9, and
wherein a ratio (C) of a molar amount of a pentamer represented by Formula (III) with respect to a total molar amount of a pentamer of the aliphatic diisocyanate included in the polyisocyanate composition is $A \times B \times 2 \times 0.9$ or more.

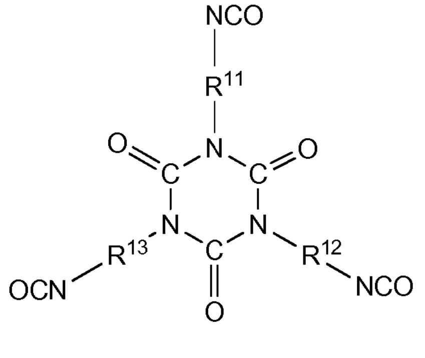
... (I)

(in Formula (I), $R^{11}$, $R^{12}$, and $R^{13}$ each independently represents a divalent aliphatic hydrocarbon group that may have an ester group,)

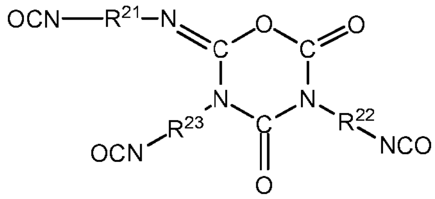

... (II)

(in Formula (II), $R^{21}$, $R^{22}$, and $R^{23}$ each independently represents a divalent aliphatic hydrocarbon group that may include an ester group,)

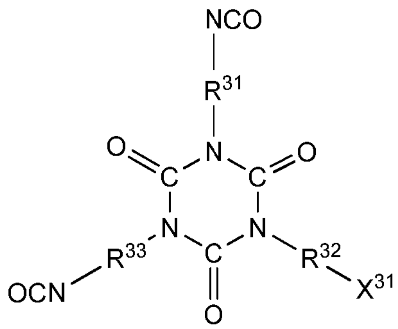

... (III)

(in Formula (III), $R^{31}$, $R^{32}$, and $R^{33}$ each independently represents a divalent aliphatic hydrocarbon group that may include an ester group, $X^{31}$ is any one of groups represented by Formulae (IV-1) to (IV-3),)

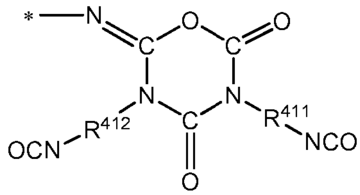

... (IV-1)

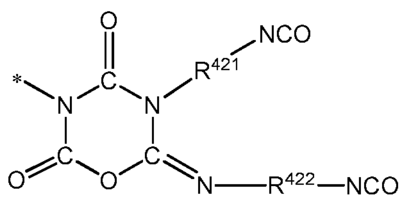

... (IV-2)

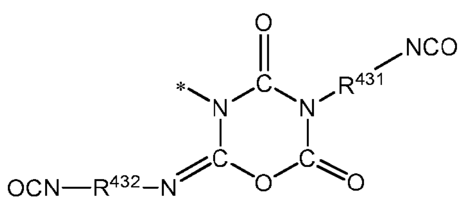

... (IV-3)

(in Formula (IV-1), $R^{411}$ and $R^{412}$ each independently represents a divalent aliphatic hydrocarbon group that may include an ester group,
in Formula (IV-2), $R^{421}$ and $R^{422}$ each independently represents a divalent aliphatic hydrocarbon group that may include an ester group,
in Formula (IV-3), $R^{431}$ and $R^{432}$ each independently represents a divalent aliphatic hydrocarbon group that may include an ester group, and
the asterisk indicates a bonding point to $R^{32}$)

**2.** The polyisocyanate composition according to claim 1, wherein a viscosity in a case of being measured at 25°C is 200 mPa·s to 2,000 mPa·s.

**3.** The polyisocyanate composition according to claim 1 or 2, further comprising:

an allophanate group,
wherein a ratio (d / (a + b + d)) of a molar amount (d) of an allophanate group with respect to a total molar amount (a + b + d) of a molar amount (a) of the isocyanurate group, a molar amount (b) of the iminooxadiazinedione group, and a molar amount (d) of the allophanate group is 0.001 to 0.10.

**4.** A paint composition comprising:

the polyisocyanate composition according to any one of claims 1 to 3; and
any one kind of polyol selected from acrylic polyol and polyester polyol or an aspartic acid ester compound represented by Formula (V).

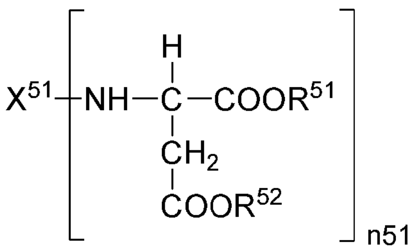

... (V)

(in Formula (V), $X^{51}$ is a divalent or higher valent organic group, $R^{51}$ and $R^{52}$ each independently represents an organic group that is inactive to an isocyanate group under a reaction condition, $R^{51}$ and $R^{52}$ may be identical to or different from each other, and n51 is an integer of 2 or more)

**5.** A method of manufacturing a coating film comprising: a step of curing the paint composition according to claim 4.

**6.** A coating film obtained by curing the paint composition according to claim 4.

## Patentansprüche

**1.** Polyisocyanat-Zusammensetzung, die aus aliphatischem Diisocyanat erhalten wird, welches 1,6-Diisocyanatohexan enthält, wobei die Zusammensetzung umfasst:

eine Isocyanuratgruppe; und
eine Iminooxadiazindiongruppe,
wobei das Verhältnis (A/(A + B)) der molaren Menge (A) eines durch die Formel (I) dargestellten Isocyanurat-Trimers zu der gesamten molaren Menge (A + B) der molaren Menge (A) des Isocyanurat-Trimers und der molaren Menge (B) des durch die Formel (II) dargestellten Iminooxadiazindion-Trimers, 0,1 bis 0,9 beträgt, und wobei das Verhältnis (C) der molaren Menge eines durch die Formel (III) dargestellten Pentamers zu der gesamten molaren Menge eines Pentamers des in der Polyisocyanatzusammensetzung enthaltenen aliphatischen Diisocyanats A x B x 2 x 0,9 oder mehr beträgt

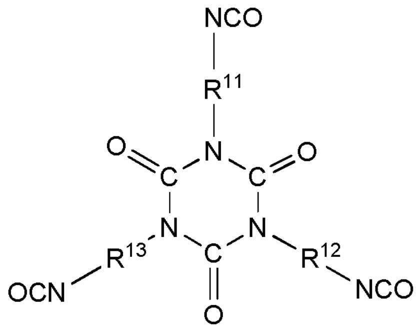

… (I),

(in Formel (I) stellen $R^{11}$, $R^{12}$ und $R^{13}$ jeweils unabhängig voneinander eine zweiwertige aliphatische Kohlenwasserstoffgruppe dar, die eine Estergruppe aufweisen kann)

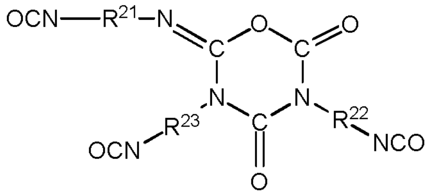

… (II)

(in Formel (II) stellen $R^{21}$, $R^{22}$ und $R^{23}$ jeweils unabhängig voneinander eine zweiwertige aliphatische Kohlenwasserstoffgruppe dar, die eine Estergruppe enthalten kann,)

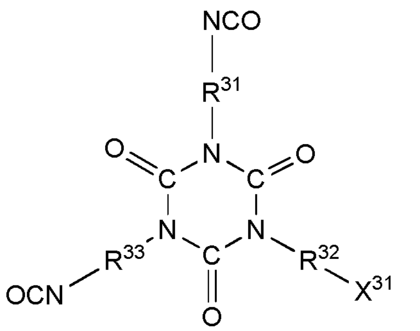

… (III)

(in Formel (III) stellen $R^{31}$, $R^{32}$ und $R^{33}$ jeweils unabhängig voneinander eine zweiwertige aliphatische Kohlenwasserstoffgruppe dar, die eine Estergruppe enthalten kann, und $X^{31}$ ist eine der durch die Formeln (IV-1) bis (IV-3) dargestellten Gruppen,)

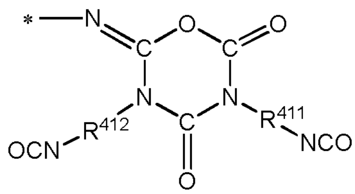

… (IV-1)

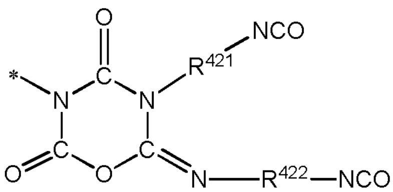

… (IV-2)

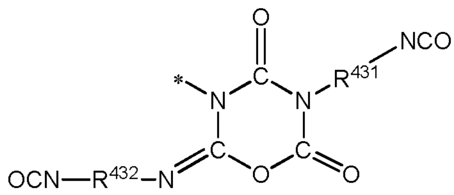

… (IV-3)

(in Formel (IV-1) stellen $R^{411}$ und $R^{412}$ jeweils unabhängig voneinander eine zweiwertige aliphatische Kohlenwasserstoffgruppe dar, die eine Estergruppe enthalten kann,
in Formel (IV-2) stellen $R^{421}$ und $R^{422}$ jeweils unabhängig voneinander eine zweiwertige aliphatische Kohlenwasserstoffgruppe dar, die eine Estergruppe enthalten kann,
in Formel (IV-3) stellen $R^{431}$ und $R^{432}$ jeweils unabhängig voneinander eine zweiwertige aliphatische Kohlenwasserstoffgruppe dar, die eine Estergruppe enthalten kann, und
das Sternchen gibt eine Verbindungsstelle zu $R^{32}$ an).

**2.** Polyisocyanat-Zusammensetzung nach Anspruch 1,
wobei eine Viskosität bei Messung bei 25° C 200 mPa·s bis 2.000 mPa·s beträgt.

**3.** Polyisocyanat-Zusammensetzung nach Anspruch 1 oder 2, weiterhin umfassend:

eine Allophanatgruppe,
wobei ein Verhältnis (d / (a + b + d)) einer molaren Menge (d) einer Allophanatgruppe zu einer gesamten molaren Menge (a + b + d) einer molaren Menge (a) der Isocyanuratgruppe, einer molaren Menge (b) der Iminooxadiazindiongruppe und einer molaren Menge (d) der Allophanatgruppe 0,001 bis 0,10 beträgt.

**4.** Farbzusammensetzung, umfassend:

die Polyisocyanat-Zusammensetzung nach einem der Ansprüche 1 bis 3; und
einen Typ eines Polyols, ausgewählt aus einem Acrylpolyol und einem Polyesterpolyol, oder eine Asparaginsäureesterverbindung, dargestellt durch die Formel (V).

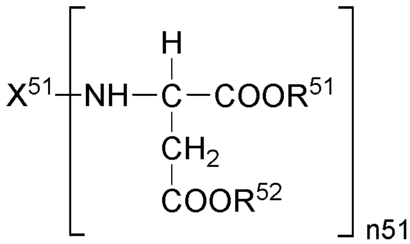

… (V)

(in Formel (V) ist $X^{51}$ eine zweiwertige oder höherwertige organische Gruppe, $R^{51}$ und $R^{52}$ stellen jeweils unabhängig voneinander eine organische Gruppe dar, die unter einer Reaktionsbedingung gegenüber einer Isocyanatgruppe inaktiv ist, $R^{51}$ und $R^{52}$ können gleich oder verschieden voneinander sein, und n51 ist eine ganze Zahl von 2 oder mehr).

**5.** Verfahren zur Herstellung eines Beschichtungsfilms, mit: einem Schritt des Aushärtens der Farbzusammensetzung nach Anspruch 4.

**6.** Beschichtungsfilm, erhalten durch Härten der Farbzusammensetzung nach Anspruch 4.

## Revendications

**1.** Composition de polyisocyanate qui est obtenue à partir de diisocyanate aliphatique incluant du 1,6-diisocyanatohexane, la composition comprenant :

un groupe isocyanurate ; et
un groupe iminooxadiazinedione,
dans laquelle un rapport (A / (A + B)) d'une quantité molaire (A) d'un trimère d'isocyanurate représenté par la Formule (I) par rapport à une quantité molaire totale (A + B) de la quantité molaire (A) du trimère d'isocyanurate et d'une quantité molaire (B) de trimère d'iminooxadiazinedione représenté par la Formule (II) est de 0,1 à 0,9, et dans laquelle un rapport (C) d'une quantité molaire d'un pentamère représenté par la Formule (III) par rapport à une quantité molaire totale d'un pentamère du diisocyanate aliphatique inclus dans la composition de polyisocyanate est A $\times$ B $\times$ 2 $\times$ 0,9 ou plus.

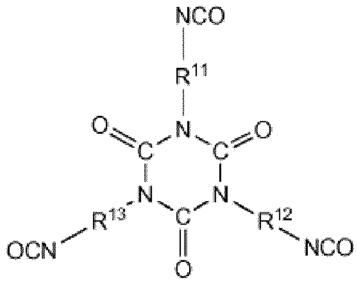

... (I)

(dans la Formule (I), $R^{11}$, $R^{12}$ et $R^{13}$ représentent chacun indépendamment un groupe hydrocarboné aliphatique divalent qui peut comporter un groupe ester),

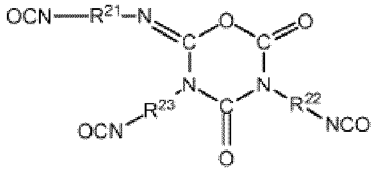

... (II)

(dans la Formule (II), $R^{21}$, $R^{22}$ et $R^{23}$ représentent chacun indépendamment un groupe hydrocarboné aliphatique divalent qui
peut inclure un groupe ester),

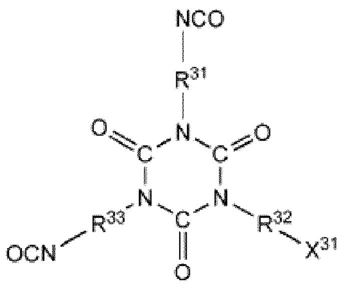

... (III)

(dans la Formule (III), $R^{31}$, $R^{32}$ et $R^{33}$ représentent chacun indépendamment un groupe hydrocarboné aliphatique divalent qui peut inclure un groupe ester, $X^{31}$ est l'un quelconque des groupes représentés par les Formules (IV-1) à (IV-3)),

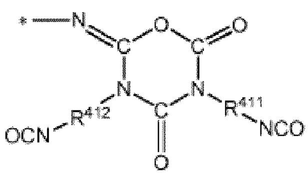

... (IV-1)

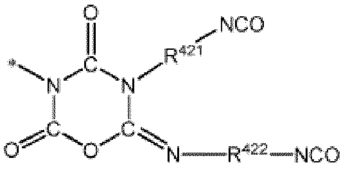
... (IV-2)

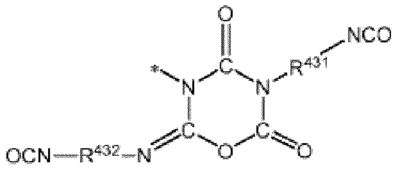
... (IV-3)

(dans la Formule (IV-1), $R^{411}$ et $R^{412}$ représentent chacun indépendamment un groupe hydrocarboné aliphatique divalent qui peut inclure un groupe ester,
dans la Formule (IV-2), $R^{421}$ et $R^{422}$ représentent chacun indépendamment un groupe hydrocarboné aliphatique divalent qui peut inclure un groupe ester,
dans la Formule (IV-3), $R^{431}$ et $R^{432}$ représentent chacun indépendamment un groupe hydrocarboné aliphatique divalent qui peut inclure un groupe ester, et
l'astérisque indique un point de liaison à $R^{32}$)

**2.** Composition de polyisocyanate selon la revendication 1, dans laquelle une viscosité dans un cas où elle est mesurée à 25 °C est de 200 mPa · s à 2 000 mPa · s.

**3.** Composition de polyisocyanate selon la revendication 1 ou 2, comprenant en outre :

un groupe allophanate,
dans laquelle un rapport (d / (a + b + d)) d'une quantité molaire (d) d'un groupe allophanate par rapport à une quantité molaire totale (a + b + d) d'une quantité molaire (a) du groupe isocyanurate, d'une quantité molaire (b) du groupe iminooxadiazinedione, et d'une quantité molaire (d) du groupe allophanate est de 0,001 à 0,10.

**4.** Composition de peinture comprenant :

la composition de polyisocyanate selon l'une quelconque des revendications 1 à 3 ; et
tout type de polyol choisi parmi le polyol acrylique et le polyol de polyester ou un composé ester d'acide aspartique représenté par la Formule (V).

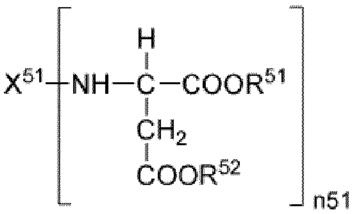
... (V)

(dans la Formule (V), $X^{51}$ est un groupe organique divalent ou de valence supérieure, $R^{51}$ et $R^{52}$ représentent chacun indépendamment un groupe organique qui est inactif vis-à-vis d'un groupe isocyanate dans une condition de réaction, $R^{51}$ et $R^{52}$ peuvent être identiques l'un à l'autre ou différents l'un de l'autre, et n51 est un nombre entier de 2 ou plus).

**5.** Procédé de fabrication d'un film de revêtement comprenant : une étape de durcissement de la composition de peinture selon la revendication 4.

**6.** Film de revêtement obtenu par durcissement de la composition de peinture selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05222007 B
- JP 3055197 B
- WO 2007046470 A
- JP 5054300 B
- JP 2014214301 A
- JP 57034107 A
- JP 61275311 A